(19) Europäisches Patentamt
European Patent Office
Office européen des brevets

(11) **EP 2 003 370 A2**

(12) **EUROPEAN PATENT APPLICATION**
published in accordance with Art. 153(4) EPC

(43) Date of publication:
**17.12.2008 Bulletin 2008/51**

(51) Int Cl.:
***F16H 25/24*** *(2006.01)* ***B62D 1/18*** *(2006.01)*

(21) Application number: **07737990.7**

(86) International application number:
**PCT/JP2007/054477**

(22) Date of filing: **07.03.2007**

(87) International publication number:
**WO 2007/102558 (13.09.2007 Gazette 2007/37)**

(84) Designated Contracting States:
**DE GB PL**

(30) Priority: **08.03.2006 JP 2006062225**
 **29.05.2006 JP 2006148175**
 **27.06.2006 JP 2006177317**
 **09.01.2007 JP 2007001673**

(71) Applicant: **NSK LTD.**
**Shinagawa-ku,**
**Tokyo 141-8560 (JP)**

(72) Inventors:
 • **OKADA, Jun**
 **c/o NSK Ltd**
 **Gunma 371-8528 (JP)**

 • **CHIKARAISHI, Kazuo**
 **c/o NSK Ltd**
 **Gunma 371-8528 (JP)**
 • **IWAKAWA, Masato**
 **c/o NSK Ltd**
 **Gunma 371-8528 (JP)**
 • **KATO, Hiroshi**
 **c/o NSK Ltd**
 **Gunma 371-8528 (JP)**

(74) Representative: **Grünecker, Kinkeldey,**
**Stockmair & Schwanhäusser**
**Anwaltssozietät**
**Leopoldstrasse 4**
**80802 München (DE)**

(54) **FEED SCREW MECHANISM AND STEERING DEVICE**

(57) Under a state of a normal temperature, a pitch B2 of a feed nut 55, 65 is formed to be slightly larger than a pitch A2 of a feed shaft screw 53, 63. Accordingly, since the screw thread of the feed nut 55, 65 is pressed to the screw thread of the feed screw shaft 53, 63 with a small interference, there is no backlash between the feed screw shaft 53, 63 and the feed nut 55, 65 so that a smooth feeding operation can be carried out. Under a state of a low temperature, the feed nut 55, 65 contracts more than the feed screw shaft 53, 63. As a result, a pitch B1 of the feed nut 55, 65 has the substantially same dimension as that of a pitch A1 of the feed screw shaft 53, 63.

*FIG. 3*

**Description**

Technical Field

The present invention relates to a steering apparatus, and more particularly to a steering apparatus that can adjust a tilting position or a telescopic position of a steering wheel by a feeding movement of a feed screw and relates a feed screw mechanism.

Background Art

The tilting position or the telescopic position of the steering wheel needs to be adjusted depending on the build or the driving position of a driver. There is a steering apparatus that adjusts the tilting position or the telescopic position by rotating a feed screw shaft with the rotation of an electric motor to linearly move a feed nut screwed to the feed screw shaft.

In a conventional feed screw mechanism used in such a steering apparatus, a feed screw shaft is formed with metal, a feed nut is molded by a synthetic resin and the feed nut is deformed inward in a radial direction, and the inner periphery of the feed nut is pressed to the outer periphery of the feed screw shaft to eliminate a backlash between the feed screw shaft and the feed nut.

However, a coefficient of thermal expansion of the synthetic resin is considerably higher than a coefficient of thermal expansion of the metal.

Accordingly, when the working temperature of the steering apparatus is lower than a normal temperature, the feed nut made of the resin is contracted in an axial direction and a radial direction. As a result, the lead of the feed nut is smaller than the lead of the feed screw shaft due to a contraction in the axial direction to increase interference. Further, the inside diameter of the feed nut is reduced more than the outside diameter of the feed screw shaft due to a contraction in the radial direction to increase interference. Accordingly, when the feed screw mechanism operates, the increase of a torque, the variation of a torque and the increase an operating sound arise.

When the feed nut made of the resin is used, a screw length is required to some degree in order to ensure a screw strength. Thus, when the diameter of the nut is compared with the axial length of the nut, the axial length of the nut is longer than the diameter of the nut. Accordingly, since a variation of dimension due to a temperature change is larger in the axial length of the nut, an influence of the increase of the interference given to the increase of an operating torque, the variation of the operating torque and the increase of the operating sound is larger owing to a lead difference caused by the contraction in the axial direction. When the operating torque is increased due to the increase of the interference, since a large motor having a large output is necessary, a production cost is high and a large space is required. Accordingly, a degree of freedom of an arrangement is limited.

Further, when the working temperature of the steering apparatus is higher than the normal temperature, the feed nut made of the resin is expanded in the axial direction and in the radial direction. As a result, the lead of the feed nut is larger than the lead of the feed screw shaft due to an expansion in the axial direction to increase the interference. Further, the inside diameter of the feed nut is enlarged more than the outside diameter of the feed screw shaft due to an expansion in the radial direction to increase a backlash.

As a steering apparatus having a feed screw mechanism for suppressing an inconvenience of the operation of the feed screw mechanism caused by the temperature change, a steering apparatus is disclosed in Patent document 1. The steering apparatus disclosed in the Patent Document 1 is provided with an axial slit having both axial ends opened in bearing parts at both ends in the axial direction of a feed nut. Further, an effective diameter of the feed nut at a central part in the axial direction thereof is set to a large diameter having an interference added in which the feed nut is fastened at a low temperature. An effective diameter of the feed nut at both the ends in the axial direction thereof is set to a small diameter having no space at a normal temperature. A remaining effective diameter in the axial direction is set to an effective diameter that gradually changes from the large diameter to the small diameter.

In the steering apparatus disclosed in the Patent Document 1, the interference in the radial direction of the feed nut can be adjusted to improve the inconvenience of the operation of the feed screw mechanism. However, in this structure, an interference in the axial direction of a screw (due to a lead difference between the feed nut and a feed screw shaft) cannot be adjusted. When the feed nut made of a resin is used, a screw length is required to some degree in order to ensure a screw strength. Thus, when the diameter of the nut is compared with the axial length of the nut, the axial length of the nut is longer than the diameter of the nut. Accordingly, since a variation of dimension due to a temperature change is larger in the axial length of the nut, an influence of the increase of the interference given to the increase of an operating torque, the variation of the operating torque and the increase of an operating sound is larger owing to the lead difference caused by a contraction in the axial direction.

Therefore, even when the interference in the radial direction of the feed nut can be adjusted at a low temperature, since the increase of the interference in the axial direction of the screw that has a larger influence cannot be suppressed, the increase of the torque, the variation of the torque and the increase of the operating sound arise. Further, since the interference is increased and the operating torque is increased, a large motor having a large output is necessary to drive it. Thus, a large space is required and a degree of freedom of an arrangement is limited. Further, since a structure of the feed nut itself is complicated, a working cost of the feed nut is high.

Further, in a feed screw mechanism shown in Patent Document 2, a feed screw shaft is formed with metal and a feed nut is molded by a synthetic resin to reduce a sliding resistance when the feed nut is screed to the feed screw shaft so that the durability of the feed screw mechanism is improved and an operating sound is reduced during a feeding movement.

However, the width of the screw thread of the feed screw shaft and the width of the screw thread of the feed nut of the conventional feed screw mechanism as shown in the Patent Document 2 are formed so as to have the same dimension (half as long as a pitch of the screw thread). However, in the feed screw shaft made of the metal and the feed nut made of the synthetic resin, the material strength of the feed nut made of the synthetic resin is extremely lower than that of the feed screw shaft. Accordingly, since an engaging length of a screw (the length of the feed nut screw in the axial direction) is determined to meet the feed nut low in its material strength, a problem arises that the feed nut is enlarged, the weight of the feed nut is increased and a production cost is increased.

In an electric tilting type steering apparatus disclosed in Patent Document 3, an elastically deforming part is provided in a bearing member for supporting a worm to apply an axial pressurizing force to the worm by the elastic force of the elastically deforming member, however, the variation of the pressurizing force due to a temperature change cannot be avoided.

Further, in an electric power steering apparatus disclosed in Patent Document 4, the dimensions of parts are respectively set so that an amount of linear expansion between the centers of a worm made of metal and a worm wheel made of a resin is equal to an amount of linear expansion of a housing made of aluminum to maintain the backlash of the engaging part of the worm and the worm wheel to a suitable value. However, the above-described dimensions are not applied to a feed screw mechanism for supporting a feed nut to freely rotate.

Patent Document 1: JP-A-2001-315648
Patent Document 2: JP-A-2000-238647
Patent Document 3: JP-UM-A-7-8156
Patent Document 4: JP-B-3379092

Disclosure of the Invention

Problems that the Invention is to Solve

It is an object of the present invention to provide a feed screw mechanism and a steering apparatus that can suppress the generation of a hammering sound during rotating a feed nut which can suppress the increase of an operating torque, the variation of an operating torque, the increase of an operating sound and the variation of a pressurizing force even when a working temperature changes. According to the feed screw mechanism and the steering apparatus provided by the present invention, since the operating torque is not increased, an output of a motor for driving the feed screw mechanism may be decreased. As a result, the motor can be made to be compact, a production cost is decreased and a space may be small. Accordingly, a degree of freedom of an arrangement is improved. Further, the structure of the feed nut itself is simple, so that a working cost of the feed nut is reduced.

Means for Solving the Problems

The above-described problems are solved by below-described units.
According to a first aspect of the present invention, there is provided a feed screw mechanism including:

a feed screw shaft made of metal; and
a feed nut made of a synthetic resin, screwed to the feed screw shaft and moving relative to the feed screw shaft, wherein
the feed screw mechanism has a property that as a working temperature of the feed screw mechanism becomes higher, an operating torque necessary for operating the feed screw mechanism becomes larger.

According to a second aspect of the present invention, there is provided a feed screw mechanism including:

a feed screw shaft made of metal; and

a feed nut made of a synthetic resin, screwed to the feed screw shaft and moving relative to the feed screw shaft, wherein

a pitch of the feed nut of the feed screw mechanism is formed to be larger than a pitch of the feed screw shaft at a normal temperature.

According to a third aspect of the present invention, there is provided the feed screw mechanism as set forth in the second aspect of the invention, wherein

the pitch of the feed nut is formed to be substantially larger than the pitch of the feed screw shaft within a range of 0.025 % to 0.075 % of the axial length of the feed nut.

According to a fourth aspect of the present invention, there is provided the feed screw mechanism as set forth in the second aspect of the invention, wherein

an annular groove is formed in an end face in the axial direction of the feed nut.

According to a fifth aspect of the present invention, there is provided the feed screw mechanism as set forth in the fourth aspect of the invention, wherein

an inner peripheral surface of the annular groove is formed so as to have a diameter reduced toward an opening side of the annular groove.

According to a sixth aspect of the present invention, there is provided the feed screw mechanism as set forth in the second aspect of the invention, wherein

a glass transition point of the synthetic resin forming the feed nut is a value exceeding an upper limit value of a range of the working temperature of the feed screw mechanism.

According to a seventh aspect of the present invention, there is provided a steering apparatus including:

a steering shaft on which a steering wheel is mounted in a rear side of a vehicle body;
a column that rotatably supports the steering shaft and adjusts a tilting position relative to a tilt center axis as a fulcrum point or adjusts a telescopic position along a central axis of the steering shaft;
a vehicle body attaching bracket that attaches the column to the vehicle body;
an electric actuator provided on the column or the vehicle body attaching bracket; and
a feed screw mechanism as set forth in the first aspect of the invention that carries out a tilting movement or a telescopic movement of the column by the electric actuator.

According to an eighth aspect of the present invention, there is provided a steering apparatus including:

a steering shaft on which a steering wheel is mounted in a rear side of a vehicle body;
a column that rotatably supports the steering shaft and adjusts a tilting position relative to a tilt center axis as a fulcrum point or adjusts a telescopic position along a central axis of the steering shaft;
a vehicle body attaching bracket that attaches the column to the vehicle body;
an electric actuator provided on the column or the vehicle body attaching bracket; and
a feed screw mechanism as set forth in the second aspect of the invention that carries out a tilting movement or a telescopic movement of the column by the electric actuator.

According to a ninth aspect of the present invention, there is provided the steering apparatus as set forth in the eighth aspect of the invention, wherein

the pitch of a feed nut is formed to be substantially larger than the pitch of a feed screw shaft within a range of 0.025 % to 0.075 % of the axial length of the feed nut.

According to a tenth aspect of the present invention, there is provided the steering apparatus as set forth in the eighth aspect of the invention, wherein

an annular groove is formed in an end face in the axial direction of the feed nut.

According to an eleventh aspect of the present invention, there is provided the steering apparatus as set forth in the ten aspect of the invention, wherein

an inner peripheral surface of the annular groove is formed so as to have a diameter reduced toward an opening side of the annular groove.

According to a twelfth aspect of the present invention, there is provided the steering apparatus as set forth in the ninth aspect of the invention, wherein

a glass transition point of the synthetic resin forming the feed nut is a value exceeding an upper limit value of a range of the working temperature of the feed screw mechanism.

According to a thirteenth aspect of the present invention, there is provided the steering apparatus as set forth in the seventh aspect of the invention, wherein

a width of the screw thread of the feed nut of the feed screw mechanism is formed to be larger than a width of the screw thread of the feed screw shaft.

According to a fourteenth aspect of the present invention, there is provided the steering apparatus as set forth in the thirteenth aspect of the invention, wherein

a ratio of the width of the screw thread of the feed nut to the width of the screw thread of the feed screw shaft is formed to be proportional to an inverse number of a material strength of the feed nut and a material strength of the feed screw shaft.

According to a fifteenth aspect of the present invention, there is provided the steering apparatus as set forth in the thirteenth aspect of the invention, wherein

the feed screw shaft is a rolled screw.

According to a sixteenth aspect of the present invention, there is provided the steering apparatus as set forth in the eighth aspect of the invention, wherein

the width of the screw thread of a feed nut of the feed screw mechanism is formed to be larger than the width of the screw thread of the feed screw shaft.

According to a seventeenth aspect of the present invention, there is provided the steering apparatus as set forth in the sixteenth aspect of the invention, wherein a ratio of the width of the screw thread of the feed nut to the width of the screw thread of the feed screw shaft is formed to be proportional to an inverse number of a material strength of the feed nut and a material strength of the feed screw shaft.

According to an eighteenth aspect of the present invention, there is provided the steering apparatus as set forth in the sixteenth aspect of the invention, wherein

the feed screw shaft is a rolled screw.

Advantage of the Invention

In the steering apparatus and the feed screw mechanism of the present invention, at the normal temperature, the pitch of the feed nut made of the synthetic resin is formed to be larger than the pitch of the feed screw shaft made of the metal. Accordingly, even when the working temperature changes, since an operating torque is not increased, the operating torque is not varied and an operating sound is not increased. Since the operating torque is not increased, an output of a motor for driving the feed screw mechanism may be decreased. As a result, the motor can be made to be compact to reduce a production cost and a space may be decreased to improve a degree of freedom of an arrangement. Further, the structure of the feed nut itself is simple, so that a working cost of the feed nut is reduced and a dimension of the feed nut in the axial direction can be shortened.

Further, in the steering apparatus, also in an operating part or a sliding part of a structural part except the feed screw mechanism, the increase of the operating torque arises at a low temperature due to the influence of grease. The feed screw mechanism of the present invention has a property that as the working temperature of the feed screw mechanism is higher, the operating torque necessary for operating the feed screw mechanism becomes larger.

Accordingly, the feed screw mechanism of the present invention is employed for the steering apparatus so that the rise of the operating torque at the low temperature can be suppressed as an entire part of the steering apparatus. As a result, since the feed screw mechanism can be driven by the motor low in its output, the motor can be made to be compact, the production cost can be reduced and the space may be small, the degree of freedom of an arrangement is improved.

In the steering apparatus of the present invention, the width of the screw thread of the feed nut of the feed screw mechanism is formed to be larger than the width of the screw thread of the feed screw shaft. Accordingly, the length of the feed nut in the axial direction is short. Consequently, the weight of the feed nut is reduced and a production cost can be reduced.

In the steering apparatus of the present invention, the dimensions of the feed nut, a bearing and a housing in the axial direction are set so that the total of the variation of the dimensions of the feed nut and the bearing in the axial direction due to a temperature change is the same as the variation of the dimension of the housing in the axial direction due to the temperature change. Accordingly, the variation of a pressurizing force due to the temperature change is suppressed, the increase of the operating torque or the generation of a hammering sound during rotating the feed nut can be suppressed.

Brief description of the Drawings

[Fig. 1] is an entire perspective view showing a state that an electric steering apparatus of the present invention is attached to a vehicle.

[Fig. 2] is a front view showing main parts of a tilting and telescopic type electric steering apparatus of the present invention.

[Fig. 3] is a sectional view taken along a line III-III of Fig. 2 and shows main parts of a tilt driving mechanism

[Fig. 4] is a front view showing main parts of the telescopic type electric steering apparatus of the present invention.

[Fig. 5] is a partly enlarged sectional view showing a screwed part of a feed screw shaft and a feed nut of a first embodiment of the present invention. Fig. 5(1) shows a state at a high temperature, Fig. 5(2) shows a state at a normal temperature and Fig. 5(3) shows a state at a low temperature.

[Fig. 6] is a sectional view showing a screwed part of a feed screw shaft and a feed nut of a second embodiment of the present invention. Fig. 6(1) is a sectional view showing an entire part of the screwed part, Fig. 6(2) is an enlarged sectional view of a part P in Fig. 6(1), and Fig. 6(3) is an enlarged sectional view of the part P showing a state when an interference between the screw thread of the feed nut and the screw thread of the feed screw shaft is large.

[Fig.7] is a sectional view showing a screwed part of a feed screw shaft and a feed nut of a third embodiment of the present invention. Fig. 7(1) is a sectional view showing an entire part of the screwed part, Fig. 7(2) is an enlarged sectional view of a part Q in Fig. 7(1), and Fig. 7(3) is an enlarged sectional view of the part Q showing a state when an interference between the screw thread of the feed nut and the screw thread of the feed screw shaft is large.

[Fig. 8] is a diagram showing results of a test carried out to recognize how an operating torque of a feed screw mechanism of the present invention changes depending on a working temperature and showing results obtained by testing the difference of characteristics depending on the difference of a pitch between the feed nut and the feed screw shaft.

[Fig. 9] is a diagram for explaining the difference between the operating torque characteristics of a conventional feed screw mechanism depending on the working temperature and the operating torque characteristics of the feed screw mechanism of the present invention depending on the working temperature.

[Fig. 10] is a diagram for explaining how the operating torque and the operating force of a conventional steering apparatus change depending on a working temperature.

[Fig. 11] is a diagram for explaining how the operating torque and the operating force of a steering apparatus of the present invention change depending on a working temperature.

[Fig. 12] is a partly enlarged sectional view showing a screwed part of a feed screw shaft and a feed nut according to a fourth embodiment.

[Fig. 13] is a partly enlarged sectional view showing one example of a calculating method of the width of the screw thread of the feed screw shaft and the width of the screw thread of the feed nut according to the fourth embodiment.

[Fig. 14] is a partly sectional front view showing main parts of a telescopic type electric steering apparatus of a fifth embodiment of the present invention.

[Fig. 15] is a sectional view showing main parts of a telescopic driving mechanism shown in Fig. 14.

[Fig. 16] is a partly sectional front view showing main parts of a telescopic type electric steering apparatus of a sixth embodiment of the present invention.

[Fig. 17] is a sectional view showing main parts of a telescopic driving mechanism shown in Fig. 16.

[Fig. 18] is a partly sectional front view showing main parts of a telescopic type electric steering apparatus of a seventh embodiment of the present invention.

[Fig. 19] is a sectional view showing main parts of a telescopic driving mechanism shown in Fig. 18.

[Fig. 20] is a front view showing main parts of a tilting and telescopic type electric steering apparatus of an eighth embodiment of the present invention.

[Fig. 21] is a sectional view taken along a line XXI-XXI of Fig. 20 and shows main parts of a tilt driving mechanism

[Fig. 22] is a sectional view taken along a line XXII-XXII of Fig. 21 and shows main parts of a tilting motor and a worm.

Description of Reference Numerals and Signs

| 101 | electric steering apparatus |
| 102 | steering shaft |
| 102A | upper steering shaft |
| 102B | lower steering shaft |
| 103 | steering wheel |
| 104 | universal joint |
| 105 | intermediate shaft |
| 106 | universal joint |
| 107 | steering gear |
| 108 | tie rod |
| 11 | vehicle body |
| 2 | vehicle body attaching bracket |

| | | |
|---|---|---|
| 21 | upper plate |
| 3 | lower column |
| 31 | bracket |
| 32 | tilt center shaft |
| 4 | upper column |
| 41 | flange |
| 5 | telescopic driving mechanism |
| 51 | telescopic motor |
| 52 | worm |
| 53 | feed screw shaft |
| 54 | worm wheel |
| 55 | feed nut |
| 56A, 56B | bearing |
| 6 | tilt driving mechanism |
| 61 | tilting motor |
| 62 | worm |
| 63 | feed screw shaft |
| 631, 632 | bearing |
| 64 | worm wheel |
| 65 | feed nut |
| 651 | tilt driving force transmitting protrusion |
| 66 | engaging hole |
| 70 | axis of screw |
| 71 | effective diameter |
| 71A | end face |
| 72 | annular groove |
| 73 | central axis |
| 74 | annular groove |
| 741 | inner peripheral surface |
| 742 | outer peripheral surface |
| 1101 | electric steering apparatus |
| 1102A | upper steering shaft |
| 1102B | lower steering shaft |
| 1103 | steering wheel |
| 1011 | vehicle body |
| 1002 | vehicle body attaching bracket |
| 1021 | upper plate |
| 1022 | side plate |
| 1003 | lower column |
| 1031 | bracket |
| 1032 | tilt center shaft |
| 1033 | elongated hole |
| 1004 | upper column |
| 1041 | flange |
| 1005 | telescopic driving mechanism |
| 1050 | housing |
| 1501 | large diameter hole |
| 1502 | small diameter hole |
| 1503 | female screw |
| 1504 | right end face |
| 1505 | closed end face |
| 1506 | through hole |
| 1051 | telescopic motor |
| 1052 | worm |
| 1053 | feed screw shaft |
| 1054 | worm wheel |
| 1055 | feed nut |
| 1551 | right end face |

| 1552 | left end face |
|---|---|
| 1056 | bearing |
| 1056A | outer ring |
| 1561 A | left end face |
| 1056B | inner ring |
| 1561 B | right end face |
| 1057 | bearing |
| 1057A | outer ring |
| 1571A | right end face |
| 1057B | inner ring |
| 1571B | left end face |
| 1058 | bearing pressing nut |
| 1581 | male screw |
| 1582 | left end face |
| 1583 | bearing hole |
| 1584 | step surface |
| 1585 | bearing hole |
| 1586 | step surface |
| 1059 | lock nut |
| 1591 | left end face |
| 1006 | tilt driving mechanism |
| 1060 | housing |
| 1601 | large diameter hole |
| 1602 | small diameter hole |
| 1603 | female screw |
| 1061 | tilting motor |
| 1611 | output shaft |
| 1612, 1613 | bearing |
| 1062 | worm |
| 1063 | feed screw shaft |
| 1631 | tilt driving force transmitting pin |
| 1064 | worm wheel |
| 1065 | feed nut |
| 1066 | bearing |
| 1067 | bearing |
| 1068 | bearing pressing nut |
| 1681 | male screw |
| 1685 | bearing hole |
| 1069 | lock nut |

Best Mode for Carrying out the Invention

In below-described embodiment, examples will be described in which the present invention is applied to a tilting and telescopic type electric steering apparatus that adjusts both of upward and downward positions and forward and backward positions of a steering wheel and a telescopic type electric steering apparatus that adjusts only forward and backward positions of a steering wheel. It is to be understood that the present invention may be applied to a tilting type electric steering apparatus in which only the upward and downward positions of a steering wheel can be adjusted.

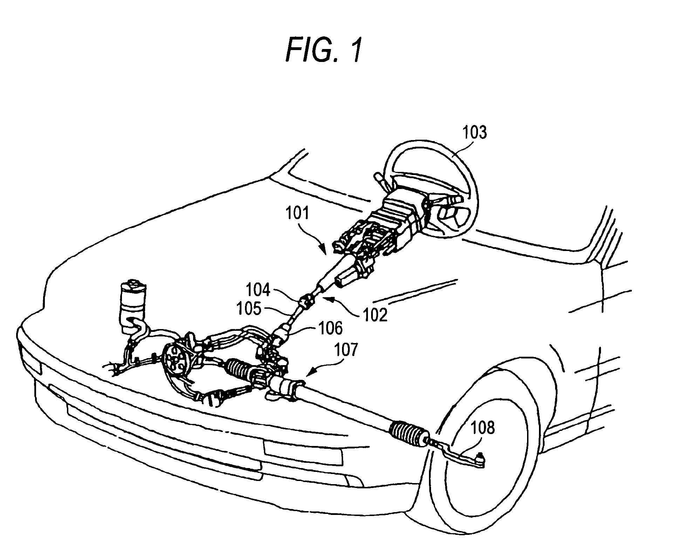

Fig. 1 is an entire perspective view showing a state that an electric steering apparatus 101 is attached to a vehicle. The electric steering apparatus 101 supports a steering shaft 102 to freely rotate. The steering shaft 102 has a steering wheel 103 attached to its upper end (a rear side of a vehicle body) and an intermediate shaft 105 connected to a lower end (a front side of the vehicle body) of the steering shaft 102 through a universal joint 104.

The intermediate shaft 105 has a universal joint 106 connected to its lower end. To the universal joint 106, a steering gear 107 having a rack and pinion mechanism is connected.

When a driver rotates and operates the steering wheel 103, a rotating force is transmitted to the steering gear 107 through the steering shaft 102, the universal joint 104, the intermediate shaft 105 and the universal joint 106 to move a tie rod 108 through the rack and pinion mechanism so that a steering angle of a wheel can be changed.

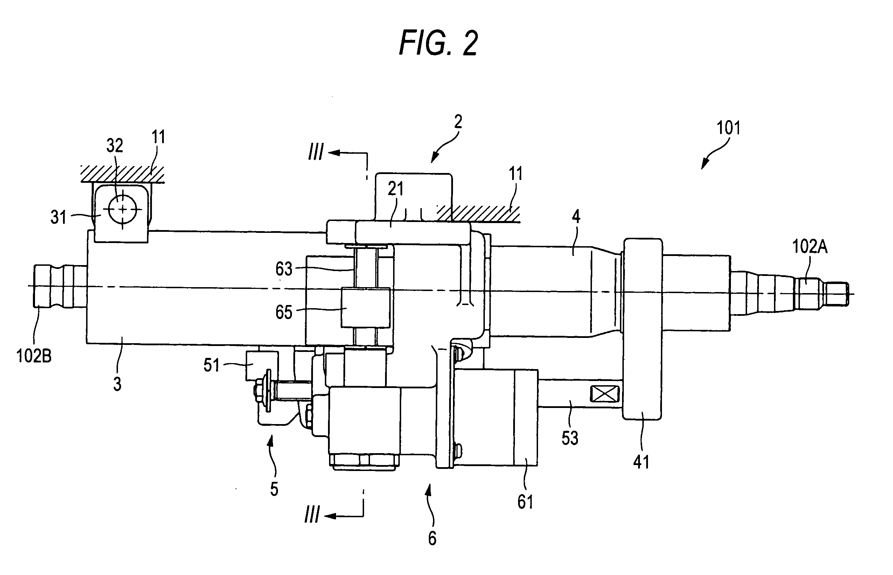

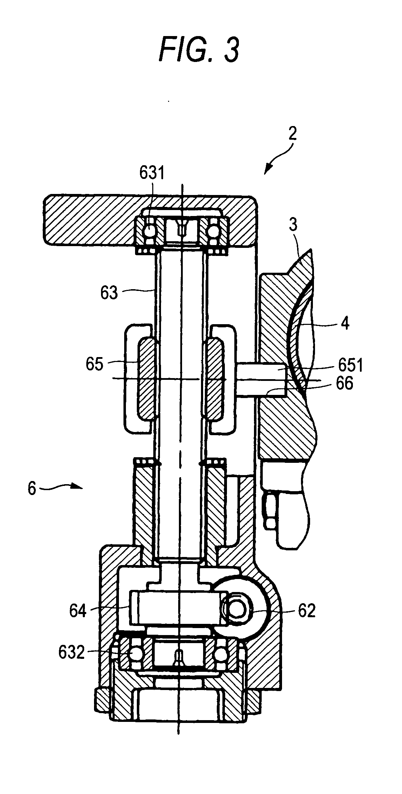

Fig. 2 is a front view showing main parts of the tilting and telescopic type electric steering apparatus 101. Fig. 3 is a sectional view taken along a line III-III of Fig. 2 and showing main parts of a tilt driving mechanism.

As shown in Figs. 2 to 3, the tilting and telescopic type electric steering apparatus 101 of the present invention includes a vehicle body attaching bracket 2, a lower column (outer column) 3 and an upper column (inner column) 4.

The vehicle body attaching bracket 2 in the rear side of a vehicle body has an upper plate 21 fixed to the vehicle body 11. In an end part of the lower column 3 in the front side of the vehicle body, a bracket 31 is integrally formed. To the bracket 31, a tilting center shaft 32 is attached. The end part of the hollow and cylindrical lower column 3 in the front side of the vehicle body is supported on the vehicle body 11 so that a tilting position can be adjusted (swing in a plane parallel to a sheet surface in Fig. 2) by considering the tilting center shaft 32 to be a fulcrum point.

To the inner periphery of the lower column 3, the upper column 4 is fitted so that a telescopic position can be adjusted (slide in parallel with a central axis of the lower column 3). On the upper column 4, an upper steering shaft 102A is supported to freely rotate. To an end part of the upper steering shaft 102A in the rear side (a right side of Fig. 2) of the vehicle body, the steering wheel 103 (see Fig. 1) is fixed.

On the lower column 3, a lower steering shaft 102B is rotatably supported. The lower steering shaft 102B is spline-connected to the upper steering shaft 102A. Accordingly, the rotation of the upper steering shaft 102A is transmitted to the lower steering shaft 102B irrespective of the telescopic position of the upper column 4.

The front side of the vehicle body in the lower steering shaft 102B (a left side of Fig. 2) is connected to the steering gear 107 (see Fig. 1) through the universal joint 104 (see Fig. 1). When the driver rotates the steering wheel 103 by hands, the lower steering shaft 102B rotates through the upper steering shaft 102A so that the steering angle of the wheel can be changed.

In the upper plate 21 of the vehicle body attaching bracket 2, right and left side plates are formed that are not shown in the drawing and extend in parallel and downward from the upper plate 21 and the lower column 3 is held between the inner side surfaces of the right and left side plates so as to tilt and slide.

To the outer periphery of the lower surface of the lower column 3, a telescopic driving mechanism 5 for adjusting a telescopic position is attached. Further, in a lower part of the vehicle body attaching bracket 2, a tilt driving mechanism 6 for adjusting a tilting position is attached.

A worm 62 attached to an output shaft not illustrated of a tilting motor 61 of the tilt driving mechanism 6 is engaged with a worm wheel 64 attached in a lower part of a feed screw shaft 63 (see Fig. 3) to transmit the rotation of the tilting motor 61 to the feed screw shaft 63.

The feed screw shaft 63 extends vertically (in a vertical direction in Figs. 2 and 3) to a central axis of the tilting motor 61 and its upper and lower ends are rotatably supported on the vehicle body attaching bracket 2 by bearings 631 and 632. To a male screw formed in the outer periphery of the feed screw shaft 63, a feed nut 65 is screwed. The feed screw shaft 63 and the feed nut 65 form a tilt driving feed screw mechanism.

In the feed nut 65, a tilt driving force transmitting protrusion 651 is formed integrally. The tilt driving force transmitting protrusion 651 protrudes toward the central axis of the lower column 3. An end of the tilt driving force transmitting protrusion 651 is fitted into an engaging hole 66 formed in the lower column 3. When the feed screw shaft 63 rotates, the feed nut 65 and the tilt driving force transmitting protrusion 651 carry out a linear movement in a vertical direction.

To the outer periphery of the lower surface of the lower column 3, a telescopic motor 51 that is partly seen in Fig. 2 is attached. To the lower surface of the lower column 3, a feed screw shaft 53 is attached in parallel with the central axis of the lower column 3 and an end of the feed screw shaft 53 in the rear side of the vehicle body (the right side of Fig. 2) is connected to a lower end of a flange 41 fixed to an end of the upper column 4 in the rear side of the vehicle body.

The rotation of a worm attached to an output shaft not illustrated of the telescopic motor 51 is transmitted to a worm wheel not shown in the drawing to rotate a feed nut that is not illustrated in the drawing and is screwed to the feed screw shaft 53. The rotation of the feed nut enables the feed screw shaft 53 to reciprocate (rightward and leftward in Fig. 2) so that the telescopic position of the upper column 4 is adjusted.

In this electric steering apparatus 101, when the tilting position of the steering wheel 103 needs to be adjusted, the driver operates a switch that is not shown in the drawing to rotate the tilting motor 61 either in a normal direction or a reverse direction. Then, the feed screw shaft 63 rotates under the rotation of the tilting motor 61 so that the feed nut 65 linearly moves.

Then, the tilt driving force transmitting protrusion formed integrally with the feed nut 65 carries out the linear movement. Since the tilt driving force transmitting protrusion 651 is engaged with the engaging hole 66 of the lower column 3, the lower column 3 is tilted upward or downward by the tilting center shaft 32 as the fulcrum point.

Further, in this electric steering apparatus 101, when the telescopic position of the steering wheel 103 needs to be adjusted, the driver operates a switch that is not shown in the drawing to rotate the telescopic motor 51 either in a normal direction or a reverse direction. Then, the feed screw shaft 53 moves in parallel with the central axis of the lower column 3 in accordance with the rotation of the telescopic motor 51 so that the upper column 4 carries out a telescopic movement.

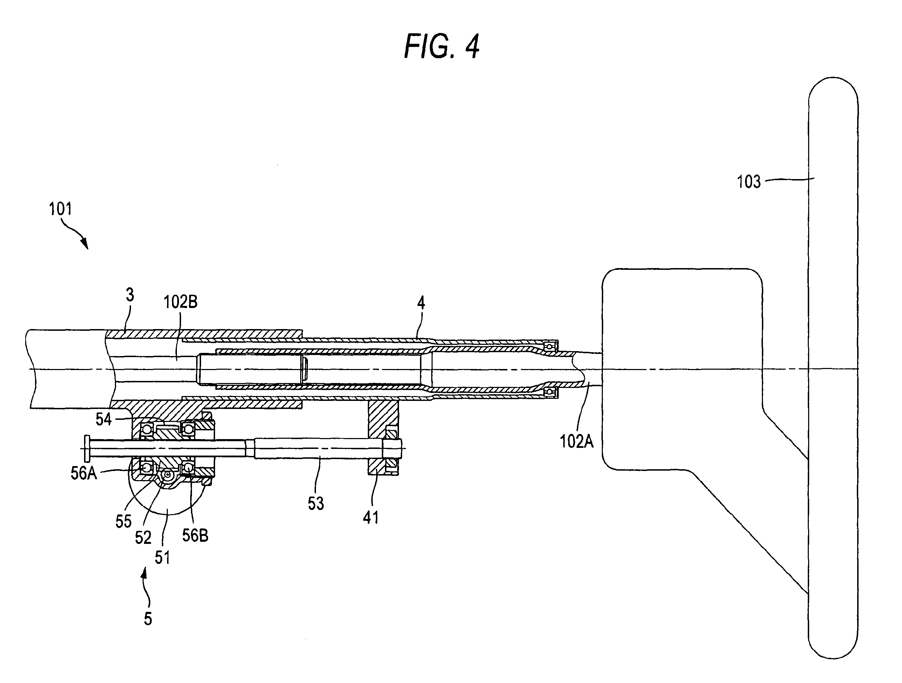

Fig. 4 is a front view showing main parts of a telescopic type electric steering apparatus 101. As shown in Fig. 4, the telescopic type electric steering apparatus 101 includes a lower column (outer column) 3 and an upper column (inner column) 4.

To the inner periphery of the lower column 3, the upper column 4 is fitted so that a telescopic position can be adjusted (slide in parallel with a central axis of the lower column 3). On the upper column 4, an upper steering shaft 102A is rotatably supported. To an end part of the upper steering shaft 102A in the rear side (a right side of Fig. 4) of a vehicle body, a steering wheel 103 is fixed.

On the lower column 3, a lower steering shaft 102B is rotatably supported. The lower steering shaft 102B is spline-connected to the upper steering shaft 102A. Accordingly, the rotation of the upper steering shaft 102A is transmitted to the lower steering shaft 102B irrespective of the telescopic position of the upper column 4.

The front side of the vehicle body in the lower steering shaft 102B (a left side of Fig. 4) is connected to a steering gear 107 (see Fig. 1) through a universal joint 104 (see Fig. 1). When the driver rotates the steering wheel 103 by hands, the lower steering shaft 102B rotates through the upper steering shaft 102A so that the steering angle of a wheel can be changed.

To the outer periphery of the lower surface of the lower column 3, a telescopic driving mechanism 5 for adjusting a telescopic position is attached. To the lower surface of the lower column 3, a feed screw shaft 53 is attached in parallel with the central axis of the lower column 3 and an end of the feed screw shaft 53 in the rear side of the vehicle body (the right end of Fig. 4) is connected to a lower end of a flange 41 fixed to an end of the upper column 4 in the rear side of the vehicle body.

On the lower surface of the lower column 3, a telescopic motor 51 is attached. The rotation of a worm 52 attached to an output shaft not illustrated of the telescopic motor 51 is transmitted to a worm wheel 54 to rotate a feed nut 55 screwed to the feed screw shaft 53. The feed nut 55 is rotatably supported on the lower surface of the lower column 3 by bearings 56A and 56B.

The rotation of the feed nut 55 enables the feed screw shaft 53 to reciprocate (rightward and leftward in Fig. 4) so that the telescopic position of the upper column 4 is adjusted. A telescopic driving feed screw mechanism is formed by the feed screw shaft 53 and the feed nut 55.

Further, in this electric steering apparatus 101, when the telescopic position of the steering wheel 103 needs to be adjusted, the driver operates a switch that is not shown in the drawing to rotate the telescopic motor 51 either in a normal direction or a reverse direction. Then, the feed screw shaft 53 moves in parallel with the central axis of the lower column 3 in accordance with the rotation of the telescopic motor 51 so that the upper column 4 carries out a telescopic movement.

Now, first to third embodiments of the present invention will be described by referring to the drawings.

First Embodiment

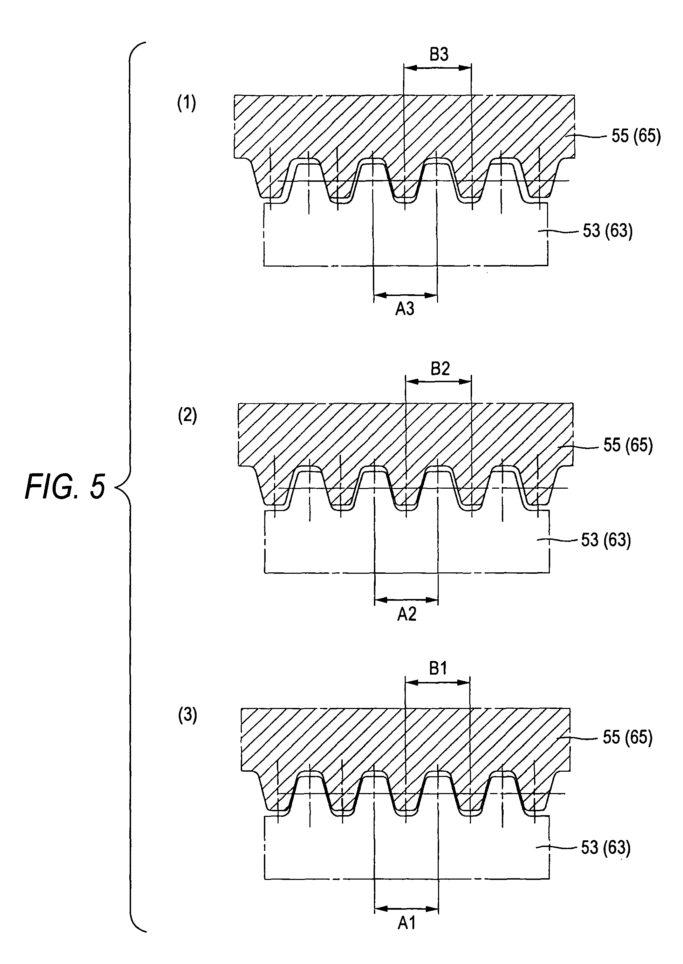

Fig. 5 is a partly enlarged sectional view showing a screwed part of a feed screw shaft 63 and a feed nut 65 for tilt driving or of a feed screw shaft 53 and a feed nut 55 for telescopic driving of a first embodiment of the present invention. Fig. 5(1) shows a state at a high temperature, Fig. 5(2) shows a state at a normal temperature and Fig. 5(3) shows a state at a low temperature.

In the first embodiment of the present invention, the feed screw shafts 53 and 63 are formed with metal such as S45C, S50C or the like. The material of the feed screw shafts 53 and 63 may be metal and aluminum or stainless steel may be used. Further, the feed nuts 55 and 65 are formed with a synthetic resin such as PPS (polyphenylene sulfide), an aromatic nylon resin, a polyamide imide resin, a polyamide MXD6 resin, a total aromatic polyimide resin, POM, a modified polyamide 6T. Further, the nominal size of the feed screw shafts 53 and 63 and the feed nuts 55 and 65 is M12, a pitch is set to 2 mm and the axial length of the feed nuts 55 and 65 is set to 20 mm.

As shown in Fig. 5(2), in the first embodiment of the present invention, under the state of the normal temperature, the pitch B2 of the feed nuts 55 and 65 is formed to be slightly larger than the pitch A2 of the feed screw shafts 53 and 63. In the embodiments of the present invention, the normal temperature indicates about 10 to 30°C. Under the state at the normal temperature, the difference between the pitch B2 and the pitch A2 is desirably set substantially within a range of 0.025 % to 0.075% of the axial length of the feed nuts 55 and 65.

Accordingly, as shown in Fig. 5(2), since the screw thread of the feed nuts 55, 65 is pressed to the screw thread of the feed screw shafts 53, 63 with a small interference, there is no backlash between the feed screw shafts 53, 63 and the feed nuts 55, 65 so that a smooth feeding operation can be carried out. Since the interference is small, an operating torque is not increased.

As shown in Fig. 5(3), under a state of a low temperature, since a coefficient of thermal expansion of the feed nuts 55 and 65 made of the synthetic resin is larger than that of the feed screw shafts 53 and 63, the feed nuts 55 and 65 contract more than the feed screw shafts 53 and 63. As a result, a pitch B1 of the feed nuts 55 and 65 has the substantially same dimension as that of a pitch A1 of the feed screw shafts 53 and 63. Accordingly, since the interference is not large in the feed nuts 55 and 65 and the feed screw shafts 53 and 63 even at the low temperature, the increase of a torque, the variation of the torque and the increase of an operating sound do not occur and the smooth feeding operation can be carried out.

Further, since the operating torque is not increased, an output of a motor for driving a screw shaft mechanism may be decreased. As a result, since the motor can be made to be compact, a production cost is reduced and a space may be small, a degree of freedom of an arrangement is improved.

As shown in Fig. 5(1), under a state of a high temperature, since the coefficient of thermal expansion of the feed nuts 55 and 65 made of the synthetic resin is larger than that of the feed screw shafts 53 and 63, the feed nuts 55 and 65 expand more than the feed screw shafts 53 and 63. As a result, a pitch B3 of the feed nuts 55 and 65 is larger than a pitch A3 of the feed screw shafts 53 and 63.

Consequently, the interference between the screw thread of the feed nuts 55 and 65 and the screw thread of the feed screw shafts 53 and 63 is larger than that at the normal temperature. However, the feed nuts 55 and 65 made of the synthetic resin are apt to be bent more under the high temperature than those under the normal temperature. Accordingly, the screw thread of the feed nuts 55 and 65 is bent to suppress the increase of the torque, the variation of the torque and the increase of the operating sound during operating the feed screw mechanism. Thus, the smooth feeding operation can be carried out.

When a deformation arises due to a thermal expansion, since a coefficient of linear expansion is constant, a quantity of deformation due to a temperature change is constant and a quantity of distortion at a high temperature is the same as that at a low temperature. However, since a Young's modulus changes due to the temperature change, a stress at the high temperature is different from that at the low temperature. The stress is proportional to a contacting pressure between a male screw and a female screw. Further, since the contacting pressure is proportional to the operating torque of the feed screw mechanism, a variation of the operating torque due to the temperature change is different between at the high temperature and at the at the low temperature.

Ordinarily, in the resin, as the temperature is higher, the Young's modulus is smaller. For instance, the Young's modulus of Zaitel (a registered trademark) as a kind of the aromatic nylon resin is 10.9 GPa at - 40°C and 7.7 GPa at 80°C. Accordingly, even when the quantity of deformation due to the temperature change is constant and the quantity of deformation at the high temperature is the same as that at the low temperature, the Young's modulus is smaller at the high temperature, so that the stress may be decreased. As a result, the operating torque may be also decreased. Therefore, the provision of the interference at the high temperature makes it more possible to suppress an influence of the interference to the increase of the operating torque to a low level than the provision of the interference at the low temperature.

Since the interference acting on the screw thread of the feed nuts 55 and 65 increases under the state of the high temperature, a problem may arise that the creep of the feed nuts 55 and 65 occurs (a phenomenon that when a load is applied at a high temperature, a plastic deformation gradually progresses with the elapse of time). Especially, in the present invention, since the slight interference is provided in the male screw and the female screw at the normal temperature, an interference larger than that conventionally obtained is formed at the high temperature. Thus, in this state, the creep is liable to occur.

In order to avoid this problem, for the synthetic resin as a material of the feed nuts 55 and 65, the synthetic resin may be selected whose glass transition point (a phenomenon that a glassy hard state changes to a rubbery state when a polymer material is heated is referred to as a glass transition and a temperature at which the glass transition occurs is referred to as a glass transition point) has a value exceeding an upper limit value within a range of a working temperature of the feed screw mechanism. In the present invention, the creep is liable to occur at the high temperature. Accordingly, in the present invention; the glass transition point is more effectively located outside the range of the working temperature of the feed screw mechanism than a conventional mechanism.

For instance, when the range of the working temperature of the feed screw mechanism is located from -40°C to 80°C, as the synthetic resin of the material of the feed nuts 55 and 65, polystyrene as a synthetic resin whose glass transition point has a value exceeding 80°C may be selected.

Second Embodiment

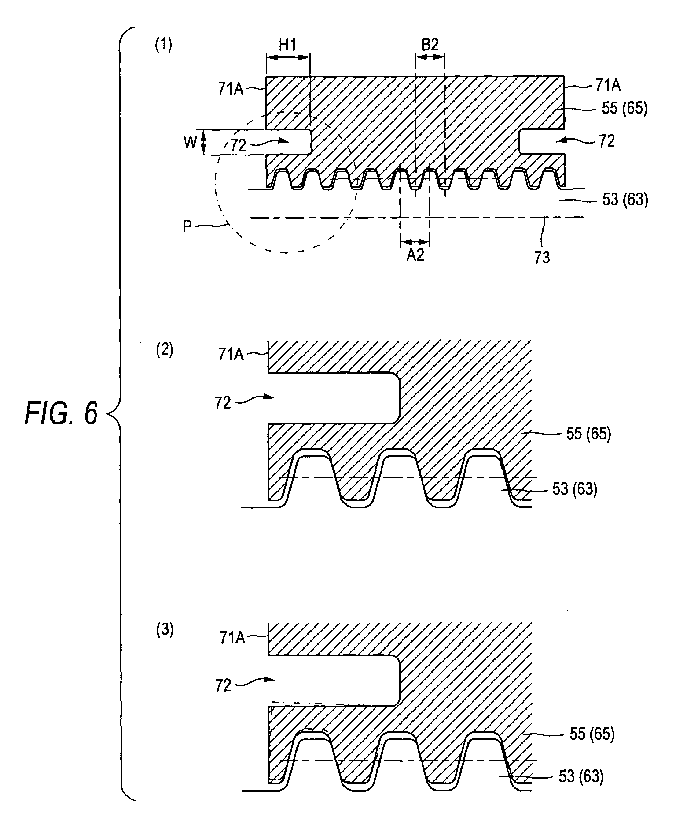

Now, a second embodiment of the present invention will be described. Fig. 6 is a sectional view showing a screwed part of feed screw shafts 53 and 63 and feed nuts 55 and 65 of a second embodiment of the present invention. Fig. 6(1) is a sectional view showing an entire part of the screwed part, Fig. 6(2) is an enlarged sectional view of a part P in Fig. 6(1), and Fig. 6(3) is an enlarged sectional view of the part P showing a state when an interference between the screw thread of the feed nut and the screw thread of the feed screw shaft is large. In the following explanation, only different structural parts from those of the first embodiment will be described and a duplicated explanation will be omitted. Further, the same parts as those of the first embodiment are designated by the same reference numerals and described.

The second embodiment is a modified embodiment of the first embodiment. In this embodiment, annular grooves are formed in both end faces in the axial direction of feed nuts 55 and 65. In the structure of the embodiment, when an interference between the screw thread of the feed nuts 55 and 65 and the screw thread of feed screw shafts 53 and 63 is large, the screw threads of both the end sides of the feed nuts 55 and 65 in the axial direction are bent outward in the radial direction to suppress the increase of a pressure in the screwed part.

In the second embodiment of the present invention, the feed screw shafts 53 and 63 are formed with metal such as S45C, S50C or the like and the feed nuts 55 and 65 are formed with a synthetic resin as in the first embodiment. Further, as shown in Fig. 6(1), under a state at a normal temperature, a pitch B2 of the feed nuts 55 and 65 is formed to be slightly larger than a pitch A2 of the feed screw shafts 53 and 63.

As shown in Figs. 6(1) and 6(2), in end faces 71A and 71A of the feed nuts 55 and 65 in the axial direction, annular grooves 72 and 72 are formed. The annular grooves 72 and 72 are formed in a circular ring shape about a central axis 73 of the feed nuts 55 and 65 and a width W of the groove is set to a fixed value. The depth H1 of the groove of the annular grooves 72 and 72 is set to a value about 1.5 times of the pitch B2 of the feed nuts 55 and 65.

For instance, at a high temperature, the feed nuts 55 and 65 formed with the synthetic resin expand more than the feed screw shafts 53 and 63 made of the metal. As a result, the interference between the screw thread of the feed nuts 55 and 65 and the screw thread of the feed screw shafts 53 and 63 is large.

Since the pitch B2 of the feed nuts 55 and 65 is formed to be slightly larger than the pitch A2 of the feed screw shafts 53 and 63, the screw threads of both the end sides in the axial direction of the feed nuts 55 and 65 are strongly pressed to the screw threads of both the end sides of the feed screw shafts 53 and 63. Thus, as shown by a two-dot chain line in Fig. 6(3), the screw threads of both the end sides in the axial direction of the feed nuts 55 and 65 (the screw threads in the vicinity of the groove depth H1 parts of the annular grooves 72 and 72) are bent outward in the radial direction to suppress the excessive increase of the pressure of the screwed part.

Accordingly, even when the feed nuts 55 and 65 and the feed screw shafts 53 and 63 are not highly accurately worked, since the increase of a torque, the variation of the torque and the increase of an operating sound of a feed screw mechanism due to a temperature change can be suppressed to a low level, a smooth feeding operation can be realized.

Third Embodiment

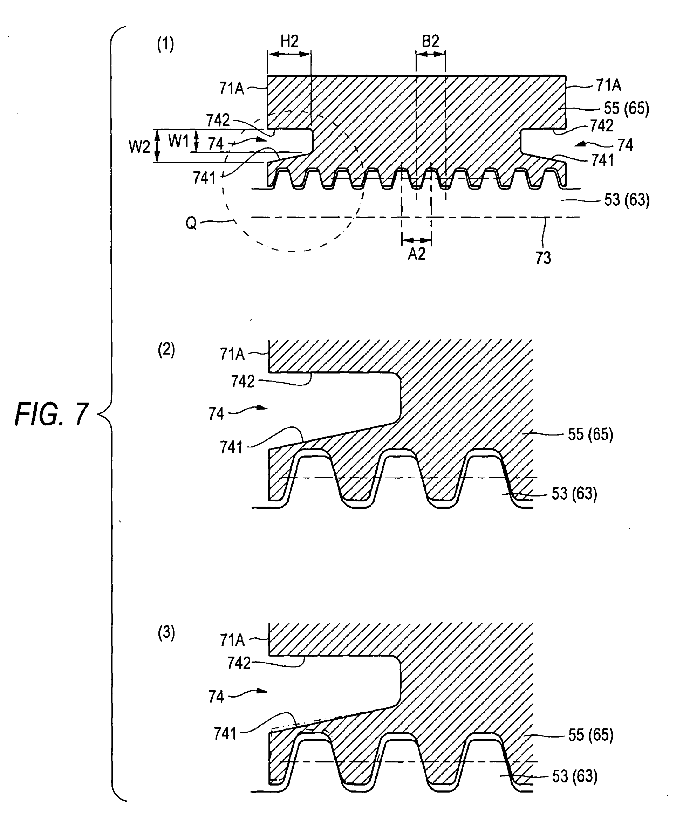

Now, a third embodiment of the present invention will be described. Fig. 7 is a sectional view showing a screwed part of feed screw shafts 53 and 63 and feed nuts 55 and 65 of a third embodiment of the present invention. Fig. 7(1) is a sectional view showing an entire part of the screwed part, Fig. 7(2) is an enlarged sectional view of a part Q in Fig. 7(1), and Fig. 7(3) is an enlarged sectional view of the part Q showing a state when an interference between the screw thread of the feed nut and the screw thread of the feed screw shaft is large. In the following explanation, only different structural parts from those of the first embodiment and the second embodiment will be described and a duplicated explanation will be omitted. Further, the same parts as those of the first embodiment and the second embodiment are designated by the same reference numerals and described.

The third embodiment is a modified embodiment of the second embodiment and shows the modified example of the configurations of annular grooves formed in both end faces in the axial direction of the feed nuts 55 and 65.

In the third embodiment of the present invention, the feed screw shafts 53 and 63 are formed with metal such as S45C, S50C or the like and the feed nuts 55 and 65 are formed with a synthetic resin as in the first embodiment and the second embodiment. Further, as shown in Fig. 7(1), under a state at a normal temperature, a pitch B2 of the feed nuts 55 and 65 is formed to be slightly larger than a pitch A2 of the feed screw shafts 53 and 63.

As shown in Figs. 7(1) and 7(2), in end faces 71A and 71A of the feed nuts 55 and 65 in the axial direction, annular grooves 74 and 74 are formed. The annular grooves 74 and 74 are formed in a circular ring shape about a central axis 73 of the feed nuts 55 and 65 and formed in a tapered shape so that a groove width W2 in an opening side is larger than a groove width W1 in a groove bottom side.

In the third embodiment, only the inner peripheral surface 741 of the annular grooves 74 and 74 is formed in a tapered shape (the opening side of the inner peripheral surface 741 has a small diameter). However, an outer peripheral surface 742 may be also formed in a tapered shape (the opening side of the outer peripheral surface 742 has a large diameter). The groove depth H2 of the annular grooves 74 and 74 is set to a value about 1.5 times of the pitch B2 of the feed nuts 55 and 65.

For instance, at a high temperature, the feed nuts 55 and 65 formed with the synthetic resin expand more than the feed screw shafts 53 and 63 made of the metal. As a result, the interference between the screw thread of the feed nuts 55 and 65 and the screw thread of the feed screw shafts 53 and 63 is large.

Since the pitch B2 of the feed nuts 55 and 65 is formed to be slightly larger than the pitch A2 of the feed screw shafts 53 and 63, the screw threads of both the end sides in the axial direction of the feed nuts 55 and 65 are strongly pressed to the screw threads of both the end sides of the feed screw shafts 53 and 63.

Thus, as shown by a two-dot chain line in Fig. 7(3), the screw threads of both the end sides in the axial direction of the feed nuts 55 and 65 (the screw threads in the vicinity of the groove depth H2 parts of the annular grooves 74 and 74) are bent outward in the radial direction to suppress the excessive increase of pressure of the screwed part. The opening side of the inner peripheral surface 741 of the annular grooves 74 and 74 is formed to have small diameter. Accordingly, as the annular grooves 74 and 74 go nearer to the opening side, the rigidity of the screw thread is more decreased. Therefore, the screw threads at both end sides can be more easily bent outward in the radial direction than those of the embodiment 2.

Accordingly, even when the feed nuts 55 and 65 and the feed screw shafts 53 and 63 are not highly accurately worked, since the increase of a torque, the variation of the torque and the increase of an operating sound of a feed screw mechanism due to a temperature change can be suppressed to a low degree, a smooth feeding operation can be realized.

In the second embodiment and the third embodiment, the annular grooves 72 or 74 are formed in both the end faces in the axial direction of the feed nuts 55 and 65, however, the annular groove 72 or 74 may be formed in one end face in the axial direction of the feed nuts 55 and 65.

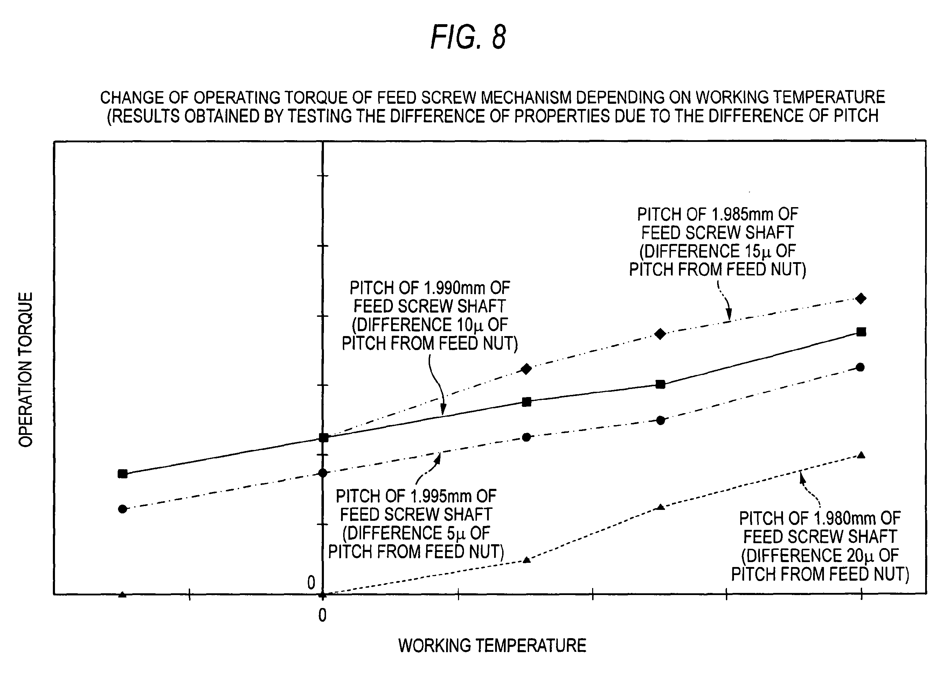

Now, an explanation will be given to the results of a test carried out to recognize how an operating torque of a feed screw mechanism of the above-described embodiment changes depending on a working temperature. Fig. 8 is a diagram showing the results of a test carried out to recognize how an operating torque of a feed screw mechanism of the present invention changes depending on a working temperature, so that the difference of characteristics due to the difference of a pitch between the feed nut and the feed screw shaft is inspected and data for determining a proper difference of pitch is obtained.

In the test shown in Fig. 8, the feed screw shaft formed with iron such as S45C, S50C or the like and the feed nut formed with PPS (polyphenylene sulfide) were used. The nominal size of the feed screw shaft and the feed nut was M12, the axial length of the feed nut was set to 20 mm and the pitch of the feed nut is set to 2.000 mm at a normal temperature and fixed.

As the pitch of the feed screw shaft, four kinds of 1.995 mm, 1.990 mm, 1.985 mm and 1.980 mm were used. That is, four kinds of feed screw mechanisms were used in which the feed nuts were combined with the feed screws so that the pitches of the feed nuts were respectively larger by $5\mu$, $10\mu$, $15\mu$, and $20\mu$ than the pitches of the feed screw shafts under the state of the normal temperature to recognize how the operating torque of the feed screw mechanisms changes depending on the working temperature.

As shown in the diagram of Fig. 8, in all the four kinds of the tested feed screw mechanisms, when the working temperature is lower than the normal temperature, the operating torque gradually decreases. When the working temperature is higher than the normal temperature, the operating torque rises, however, the rise of the operating torque is suppressed to a small value.

In this case, in the feed screw mechanism that the difference in pitch between the feed nut and the feed screw shaft is $20\mu$, when the working temperature is low, the operating torque is 0. Since the operating torque of 0 means that a backlash is generated in the feed screw shaft, the operating torque of 0 is not preferable for the characteristics of the feed screw mechanism and the feed screw mechanism for a steering apparatus. Accordingly, the three kinds of the feed screw mechanisms having the difference of the pitch of $5\mu$, $10\mu$ and $15\mu$ relative to the feed nut are desirable for the steering apparatus. That is, it is recognized that under the state of the normal temperature, the difference in pitch between the feed nut and the feed screw shaft is substantially desirably set within a range of 0.025% to 0.075% of the axial length of the feed nut.

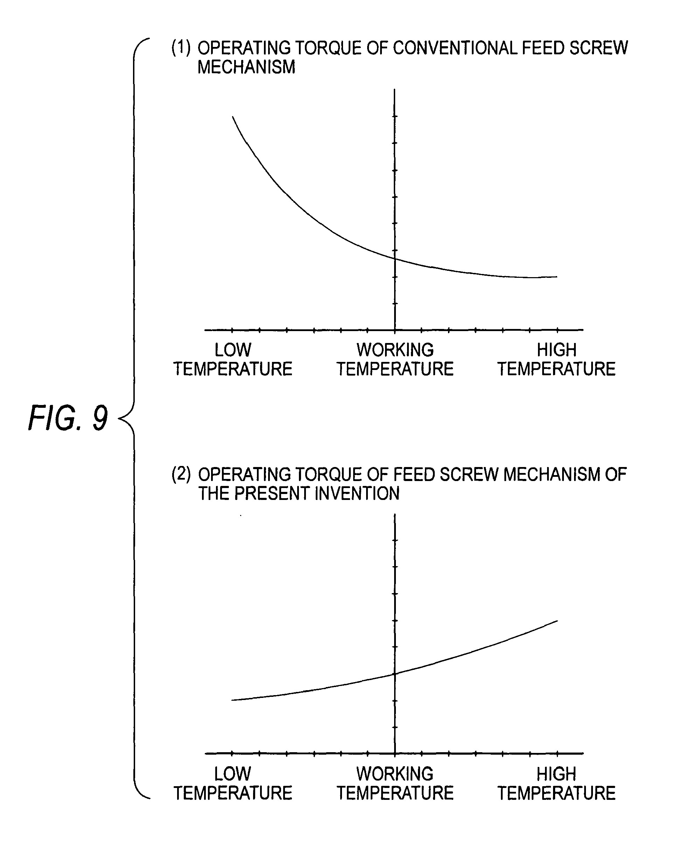

Fig. 9 is a diagram for explaining the difference between the characteristics of an operating torque of a conventional feed screw mechanism depending on the working temperature and the characteristics of the operating torque of the feed screw mechanism of the present invention depending on the working temperature.

As shown in Fig. 9(1), in the conventional feed screw mechanism that the pitches of a feed nut made of a synthetic resin and a feed screw shaft made of metal are formed to have the same dimension at a normal temperature, when the working temperature is lower than the normal temperature, the feed nut made of the synthetic resin contracts in the axial direction and in the radial direction. Thus, the interference of the feed screw mechanism in the axial direction and the radial direction is increased, so that when the feed screw mechanism operates, the operating torque is increased. When the operating torque is increased, a large motor having a large output is necessary.

As compared therewith, as shown in Fig. 9(2), in the feed screw mechanism of the present invention that the pitch of the feed nut made of the synthetic resin is formed to be larger the pitch of the feed screw shaft made of the metal at the normal temperature, since the screw thread of the feed nut is pressed to the screw thread of the feed screw shaft with a small interference at the normal temperature, the operating torque is low.

As apparent from the results of the test shown in Fig. 8, when the working temperature is lower than the normal temperature, since the feed nut contracts more than the feed screw shaft, the interference of the feed screw mechanism is decreased. Thus, the operating torque of the feed screw mechanism is gradually decreased. When the working temperature is higher than the normal temperature, since the feed nut formed with the synthetic resin has a coefficient of thermal expansion higher than that of the feed screw shaft, the feed nut expands more than the feed screw shaft. As a result, the interference between the screw thread of the feed nut and the screw thread of the feed screw shaft is larger than that at the normal temperature.

However, the feed nut made of the synthetic resin is more liable to be bent under the state of a high temperature relative to the case under the state of the normal temperature. Accordingly, since the screw thread of the feed nut is bent and the increase of the operating torque is suppressed when the feed screw mechanism operates, a smooth feeding operation can be realized. As a result, the output of a motor for driving the feed screw mechanism may be decreased and the motor can be made to be compact.

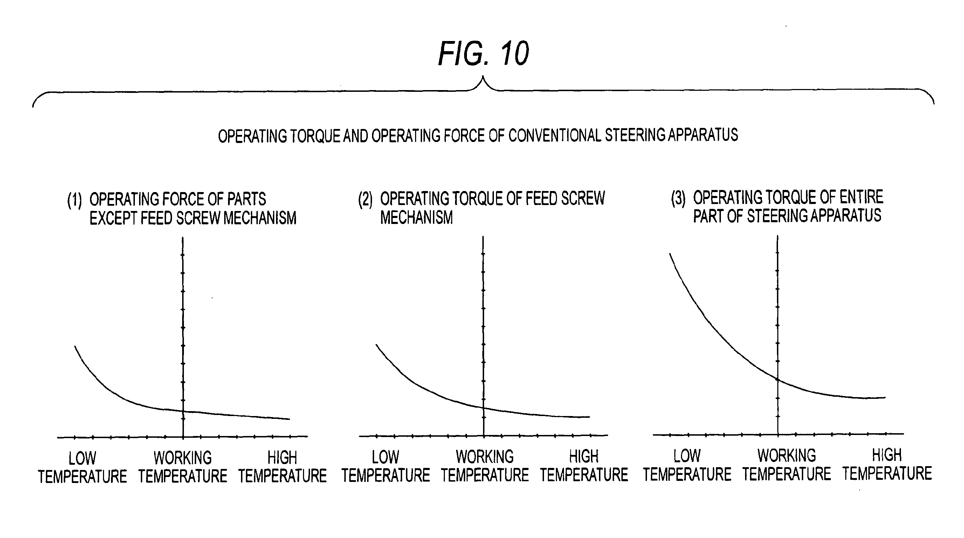

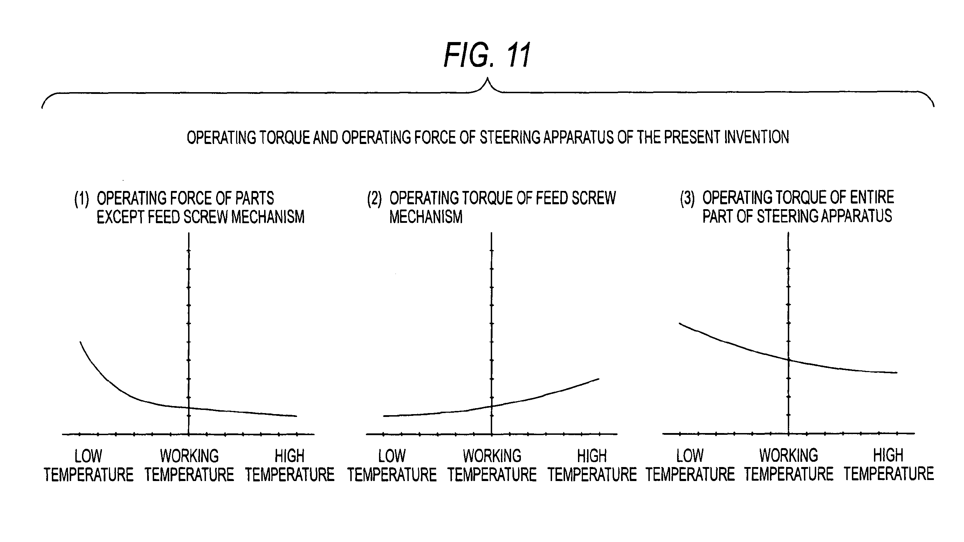

Fig. 10 is a diagram for explaining how the operating torque and the operating force of a conventional steering apparatus change depending on a working temperature. Fig. 11 is a diagram for explaining how the operating torque and the operating force of a steering apparatus of the present invention change depending on a working temperature.

As shown in Fig. 10(1), in other parts than the feed screw mechanism of the conventional steering apparatus, when the working temperature is lower than the normal temperature, since the viscosity of grease applied to an operating part or a sliding part is high, the operating force is increased. Further, as shown in Fig.10(2), in the feed screw mechanism of the conventional steering apparatus, when the working temperature is lower than the normal temperature, a feed nut made of a synthetic resin contracts in the axial direction and in the radial direction. Thus, the interference of the feed screw mechanism in the axial direction and the radial direction is increased, so that the operating torque when the feed screw mechanism operates is increased.

As a result, as shown in Fig. 10(3), since an entire part of the conventional steering apparatus has the operating force obtained by adding the operating force of Fig. 10 (1) and the operating force of Fig. 10(2), when the working temperature is lower than the normal temperature, the operating force is increased. Thus, a large motor having a large output is required, so that a production cost is increased, a large space is necessary and a degree of freedom of an arrangement is restricted.

As compared therewith, according to the steering apparatus of the present invention, as shown in Fig. 11 (1), in other parts than the feed screw mechanism of the steering apparatus of the present invention, when the working temperature is lower than the normal temperature, since the viscosity of grease applied to an operating part or a sliding part is high, the operating force is increased like other parts than the feed screw mechanism of the conventional steering apparatus.

However, as shown in Fig. 11(2), in the feed screw mechanism of the steering apparatus of the present invention, when the working temperature is lower than the normal temperature, since the feed nut contracts more than the feed screw shaft, the interference of the feed screw mechanism is decreased. Thus, the operating torque of the feed screw mechanism is gradually decreased.

As a result, as shown in Fig. 11(3), since an entire part of the steering apparatus of the present invention has the operating force obtained by adding the operating force of Fig. 11(1) and the operating force of Fig. 11(2), even when the working temperature is lower than the normal temperature, the rise of the operating force is suppressed to a small value. Thus, a motor may be made to be compact, a production cost is reduced, space may be decreased and a degree of freedom of an arrangement is improved.

In the above-described embodiment, a lower column 3 is formed by an outer column and an upper column 4 is formed by an inner column, however, the lower column 3 may be formed by the inner column and the upper column 4 may be formed by the outer column. Fourth Embodiment

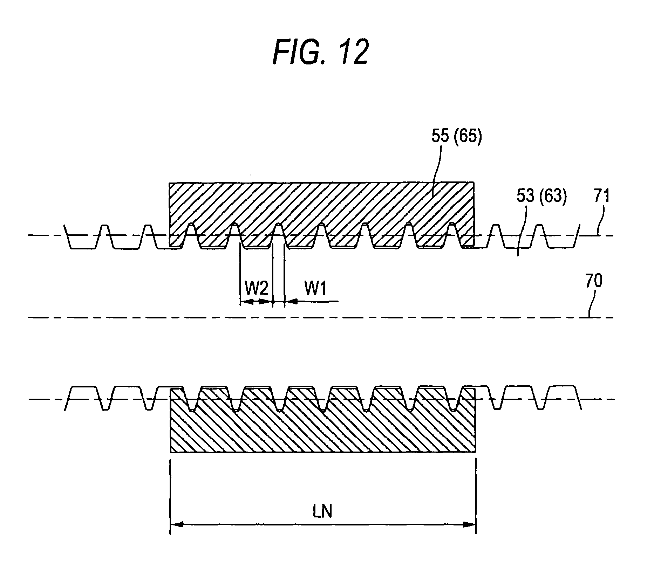

Now, a fourth embodiment of the present invention related to the width of a screw thread will be described. Fig. 12 is a partly enlarged sectional view showing a screwed part of a feed screw shaft 63 and a feed nut 65 for the above-described tilt driving or of a feed screw shaft 53 and a feed nut 55 for the telescopic driving. As shown in Fig. 12, the width W2 of the screw thread of the feed nuts 55 and 65 is formed to be larger than the width W1 of the screw thread of the feed screw shafts 53 and 63. Here, the width W2 of the screw thread and the width W1 of the screw thread mean the width of the screw thread measured at a position of an effective diameter 71 in a section including an axis 70 of a screw.

In the fourth embodiment of the present invention, the feed screw shafts 53 and 63 are formed with metal such as S45C, S50C or the like. The material of the feed screw shafts 53 and 63 may be metal and aluminum, stainless steel or brass may be used. Further, the feed nuts 55 and 65 are formed with a synthetic resin such as PPS (polyphenylene sulfide), an aromatic nylon resin, a polyamide imide resin, a polyamide MXD6 resin, a total aromatic polyimide resin, POM, a modified polyamide 6T, PEEK(polyether.ether.ketone), PA(polyamide), etc.

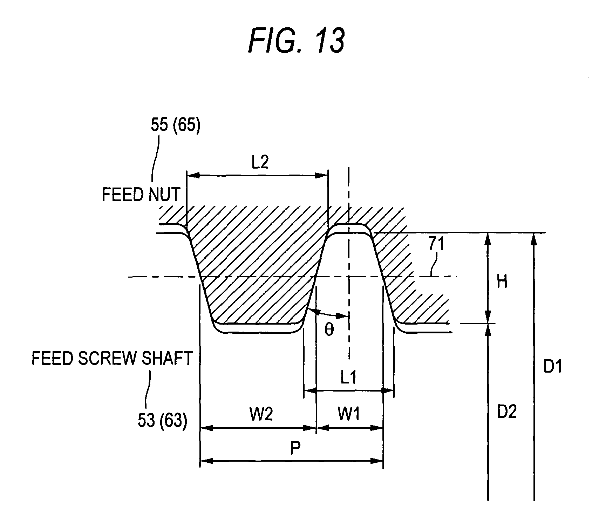

In the fourth embodiment of the present invention, the ratio of the width W2 of the screw thread of the feed nuts 55 and 65 to the width W1 of the screw thread of the feed screw shafts 53 and 63 is formed to be proportional to an inverse number of a material strength of the feed nuts 55 and 65 and a material strength of the feed screw shafts 53 and 63. Fig. 13 is a partly enlarged sectional view showing one example of a method for calculating the width W1 of the screw thread of the feed screw shafts 53 and 63 and the width W2 of the screw thread of the feed nuts 55 and 65.

In Fig. 13, the outside diameter D1 of the feed screw shafts 53 and 63 is set to 12.4 mm and the inside diameter D2 of the feed nuts 55 and 65 is set to 10.4 mm. In this feed screw mechanism, an engaging height H of the feed screw shafts 53 and 63 and the feed nuts 55 and 65 is obtained by H = (D1-D2)/2 = (12.4 - 10.4)/2 = 1. 0mm.

Assuming that the shearing length of the feed screw shafts 53 and 63 is L1, the shearing length of the feed nuts 55 and 65 is L2, the total shearing length of the sharing length L1 and the shearing length L2 is L, a pitch P of the screw thread is 2.0 mm and a half angle of the screw thread is 15°, the total shearing length L is obtained by L = L1 + L2 = P + H * tanø *2 = 2.0 + 1.0*tan(15°) *2 = 2.536 mm.

Assuming that the material of the feed screw shafts 53, and 63 is S45C, the shearing strength $\tau 1$ of the feed screw shafts is 400N/mm$^2$. Assuming that the material of the feed nuts 55 and 65 is an aromatic nylon resin, the shearing

strength $\tau 2$ of the feed nuts is 95 N/mm$^2$. When the shearing length L1 of the feed screw shafts 53 and 63 is calculated so as to have a value proportional to an inverse number of the shearing strength of the feed nuts 55 and 65 and the shearing strength of the feed screw shafts 53 and 63,

$$L1 = L*(\tau 2*D1*\pi)/((\tau 1*D2*\pi) + (\tau 2*D1*\pi)) = 2.536*(95*12.4*\pi)/(400*10.4*$$

$$\pi) + (95*12.4*\pi)) = 0.560 \text{ mm is obtained}.$$

Similarly, when the shearing length L2 of the feed nuts 55 and 65 is calculated so as to have a value proportional to an inverse number of the shearing strength of the feed screw shafts 53 and 63 and the shearing strength of the feed nuts 55 and 65, L2 = L*($\tau 1$*D2*$\pi$)/(($\tau 1$*D2*$\pi$) + ($\tau 2$*D1*$\pi$)) = 2.536*(400*10.4*$\pi$)/(400*10.4*$\pi$) + (95*12.4*$\pi$)) = 1.976 mm is obtained.

Accordingly, the width W1 of the screw thread of the feed screw shafts 53 and 63 is obtained by

$$W1 = L1 - H*\tan\phi = 0.560 - 1.0*\tan(15^o) = 0.292 \text{ mm}.$$

Further, the width W2 of the screw thread of the feed nuts 55 and 65 is obtained by

$$W2 = L2 - H*\tan\phi = 1.976 - 1.0*\tan(15^o) = 1.708 \text{ mm}.$$

Accordingly, the feed nuts 55 and 65 and the feed screw shafts 53 and 63 have the same withstand load of the screw threads at the screwed position, the axial length (an engaging length) of the feed nuts 55 and 65 LN (see Fig. 12) can be shortened. Therefore, the feed nut can be made to be compact, the weight of the feed nut can be reduced, and a production cost can be lowered. Further, since the width W1 of the screw thread of the feed screw shafts 53 and 63 is decreased, the feed screw shaft is lightened and the production cost can be reduced.

Further, when the feed screw shafts 53 and 63 are rolled screws, the production cost can be more reduced.

In the above-described fourth embodiment, a lower column 3 is formed by an outer column and an upper column 4 is formed by an inner column, however, the lower column 3 may be formed by the inner column and the upper column 4 may be formed by the outer column.

According to the fourth embodiment, the below-described steering apparatuses of (1-1) to (1-3) are provided.

(1-1) A steering apparatus comprising:

a steering shaft on which a steering wheel is mounted in a rear side of a vehicle body;
a column that is attached to a vehicle body through a vehicle body attaching bracket, supports the steering shaft so as to freely rotate and can carry out an adjustment of a tilting position by considering a tilt center axis as a fulcrum point or an adjustment of a telescopic position along a central axis of the steering shaft;
an electric actuator provided on the column or the vehicle body attaching bracket; and
a feed screw mechanism that is driven by the electric actuator and carries out a tilting movement or a telescopic movement of the column by a relative movement of a feed screw shaft made of metal and a feed nut made of a synthetic resin which are screwed to each other, wherein the width of the screw thread of the feed nut of the feed screw mechanism is formed to be larger than the width of the screw thread of the feed screw shaft.

(1-2) A steering apparatus according to (1-1), wherein a ratio of the width of the screw thread of the feed nut to the width of the screw thread of the feed screw shaft is formed to be proportional to an inverse number of the material strength of the feed nut and the material strength of the feed screw shaft.

(1-3) A steering apparatus according to (1-1) or (1-2), wherein the feed screw shaft is a rolled screw.

Now, a detailed structure of an electric steering apparatus of a fifth embodiment to an eighth embodiment of the present invention will be described.

Fifth Embodiment

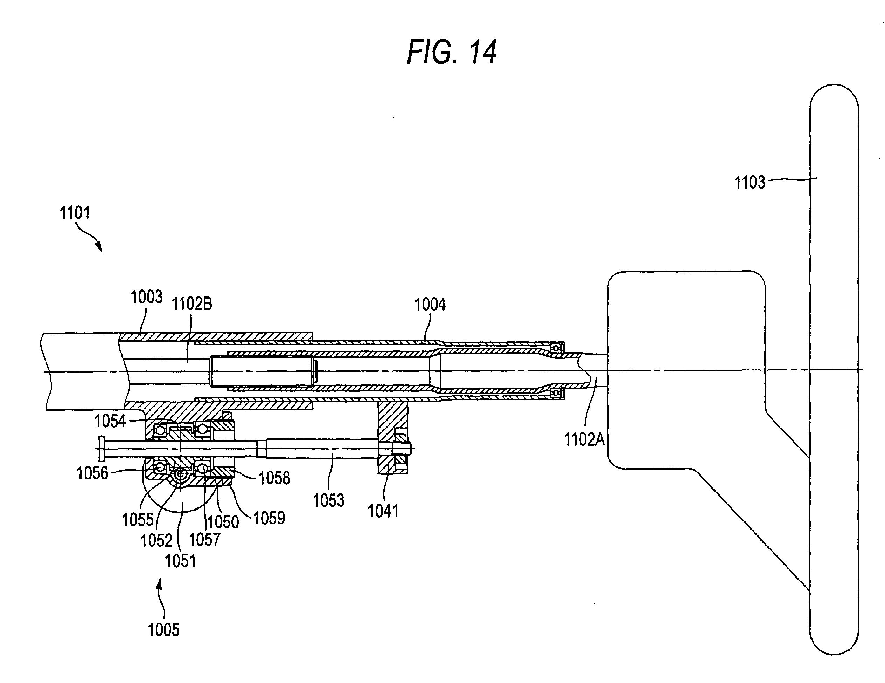

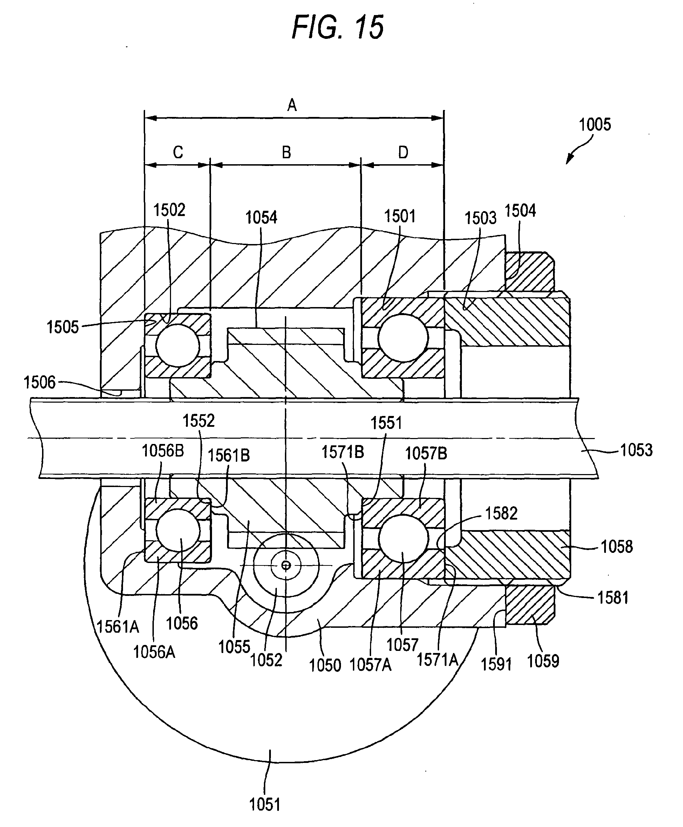

Fig. 14 is a partly sectional front view showing main parts of a telescopic type electric steering apparatus of a fifth embodiment of the present invention. Fig. 15 is a sectional view showing main parts of a telescopic driving mechanism shown in Fig. 14.

As shown in Figs. 14 to 15, the telescopic type electric steering apparatus 1101 includes a lower column (outer column) 1003 and an upper column (inner column) 1004.

In the outer periphery of a lower surface of the lower column 1003, a housing 1050 is formed in which a telescopic driving mechanism 1005 for carrying out an adjustment of a telescopic position. On the lower surface of the lower column 1003, a round bar shaped feed screw shaft 1053 is arranged in parallel with a central axis of the lower column 1003. An end of the feed screw shaft 1053 in a rear part of a vehicle body (a right end in Fig. 14) is connected to a lower end of a flange 1041 fixed to the upper column 1004 in the rear side of the vehicle body.

To the housing 1050, a telescopic motor 1051 is attached. The rotation of a worm 1052 attached to an output shaft of the telescopic motor 1051 that is not shown in the drawing is transmitted to a worm wheel 1054 to rotate a feed nut 1055 screwed to the feed screw shaft 1053. The worm wheel 1054 is formed on the outer periphery of the feed nut 1055. The feed nut 1055 is supported on the housing 1050 so as to freely rotate by bearings 1056 and 1057.

In the housing 1050, a hole 1501 of a large diameter circular in section is formed in an opening end side (a right side of Fig. 15) and a hole 1502 of a small diameter circular in section is formed in a closed end side (a left side of Fig. 15). To the hole 1501 of the large diameter, an outer ring 1057A of the bearing 1057 is internally fitted. To the hole 1502 of the small diameter, an outer ring 1056A of the bearing 1056 whose outside diameter is smaller than the outer ring 1057A of the bearing 1057 is internally fitted. Further, on the housing 1050, in the closed end side (the left side of Fig. 15), a through hole 1506 having a diameter larger than the dimension of the outside diameter of the feed screw shaft 53 is formed and connected to a closed end face 1505 and the feed screw shaft 1053 passes through the through hole 1506 with a space.

Further, in the large diameter hole 1501, a female screw 1503 is formed in the opening end side and a male screw 1581 formed on an outer periphery of a bearing pressing nut 1058 is screwed to the female screw 1503 to press leftward a right end face 1571A of the outer ring 1057A of the bearing 1057 by a left end face 1582 of the bearing pressing nut 1058. A lock nut 1059 is screwed to the male screw 1581 of the bearing pressing nut 1058 to press a left end face 1591 of the lock nut 1059 to a right end face 1504 of the housing 1050 and lock the bearing pressing nut 1058.

A left end face 1561A of the outer ring 1056A of the bearing 1056 abuts on the closed end face 1505 at the left end of the small diameter hole 1502. The dimensions of the outside diameters of a right end face 1551 and a left end face 1552 of the feed nut 1055 are designed to be larger than the dimensions of the inside diameters of an inner ring 1057B of the bearing 1057 and an inner ring 1056B of the bearing 1056 and smaller than the dimensions of the outside diameters of the inner ring 1057B of the bearing 1057 and the inner ring 1056B of the bearing 1056. Then, a left end face 1571B of the inner ring 1057B of the bearing 1057 abuts on the right end face 1551 and a right end face 1561B of the inner ring 1056B of the bearing 1056 abuts on the left end face 1552.

When the right end face 1571A of the outer ring 1057 of the bearing 1057 is pressed leftward by the left end face 1582 of the bearing pressing nut 1058, its pressing force is transmitted to the closed end face 1505 at the left end of the small diameter hole 1502 through the left end face 1571B of the inner ring 1057B of the bearing 1057, the right end face 1551 of the feed nut 1055, the left end face 1552 of the feed nut 1055, the right end face 1561B of the inner ring 1056B of the bearing 1056 and the left end face 1561A of the outer ring 1056A of the bearing 1056. Accordingly, a proper pressurizing force can be applied to the bearings 1056 and 1057.

In this electric steering apparatus 1101, when the telescopic position of a steering wheel 1103 needs to be adjusted, a driver operates a switch that is not shown in the drawing to rotate the telescopic motor 1051 either in a normal direction or a reverse direction. Then, the rotation of the telescopic motor 51 enables the feed screw shaft 1053 to linearly move in parallel with the central axis of the lower column 1003. Thus, the upper column 1004 carries out a telescopic movement.

In the telescopic driving mechanism 1005, when a temperature changes, axial dimensions respectively change proportionally to the coefficients of linear expansion of materials of the housing 1050, the feed nut 1055, the bearings 1056 and 1057. In the embodiment of the present invention, since the housing 1050 is formed with aluminum, the feed nut 1055 is formed with an aromatic nylon resin and the bearings 1056 and 1057 are formed with bearing steel (SUJ2), the coefficients of linear expansion are respectively greatly different. Accordingly, since the variations of the axial dimensions are greatly different, an initially set pressurizing force is changed.

In order to prevent the initially set pressurizing force from changing even when the temperature changes, the dimensions of the parts may be respectively set so that the total of the variations of the axial dimensions of the feed nut 1055 and the bearings 1056 and 1057 is constantly equal to the variation of the axial dimension of the housing 1050 for accommodating the feed nut 1055 and the bearings 1056 and 1057.

That is, in Fig. 15, it is assumed that a distance between both the end faces of the bearings 1056 and 1057 of the housing 1050 is A, a distance between the right end face 1551 and the left end face 1552 of the feed nut 1055 is B, an axial width of the bearing 1056 is C and an axial width of the bearing 1057 is D. Further, assuming that a coefficient of linear expansion of the housing 1050 is K1, a coefficient of linear expansion of the feed nut 1055 is K2 and a coefficient of linear expansion of the bearings 1056 and 1957 is K3,

$$A = B + C + D$$

$$A{\cdot}K1 = B{\cdot}K2 + (C+D){\cdot}K3$$

are established.

The distance A between both the end faces of the bearings 1056 and 1057 of the housing 1050, the distance B between the right end face 1551 and the left end face 1552 of the feed nut 1055, the axial width C of the bearing 1056 and the axial width D of the bearing 1057 may be set so as to satisfy the two equations at the same time.

When the dimensions of the respective parts are set as described above, even if the temperature changes, the total of the variations of the axial dimensions of the feed nut 1055 and the bearings 1056 and 1057 is constantly equal to the variation of the axial dimension of the housing 1050 for accommodating the feed nut 1055 and the bearings 1056 and 1057. Therefore, the variation of the initially set pressurizing force does not arise and the rise of an operating torque or the generation of a hammering sound during rotating the feed nut does not occur.

Further, from the above-described two equations, $(B+C+D){\cdot}K1 = B{\cdot}K2 + (C+D){\cdot}K3$ is obtained.

Here, for instance, assuming that the coefficient of linear expansion K1 of the housing 1050 is $2.36 \times 10^{-5}$, the coefficient of linear expansion K2 of the feed nut 1055 is $4 \times 10^{-5}$ and the coefficient of linear expansion K3 of the bearings 1056 and 1057 is $1.17 \times 10^{5}$,

$$(B+C+D){\cdot}2.36 = B{\cdot}4 + (C+D){\cdot}1.17$$

is established and

$$B = 0.73{\cdot}(C+D)$$

is obtained.

Accordingly, the distance B between the right end face 1551 and the left end face 1552 of the feed nut 1055, the axial width C of the bearing 1056 and the axial width D of the bearing 1057 may be set so as to satisfy this equation.

Sometimes, the dimensions of the parts cannot be respectively set so as to satisfy the above-described two equations at the same time owing to the restriction of a layout of the telescopic driving mechanism 1005. In that case, for instance, a glass fiber is added to the feed nut 1055 made of the resin to change the coefficient of linear expansion K2 of the feed nut 1055. Thus, while the restriction of the layout is cancelled, the dimensions of the parts can be respectively set so as to satisfy the above-described two equations at the same time. A quantity of addition of the glass fiber is preferably 30 to 70 mass %.

Sixth Embodiment

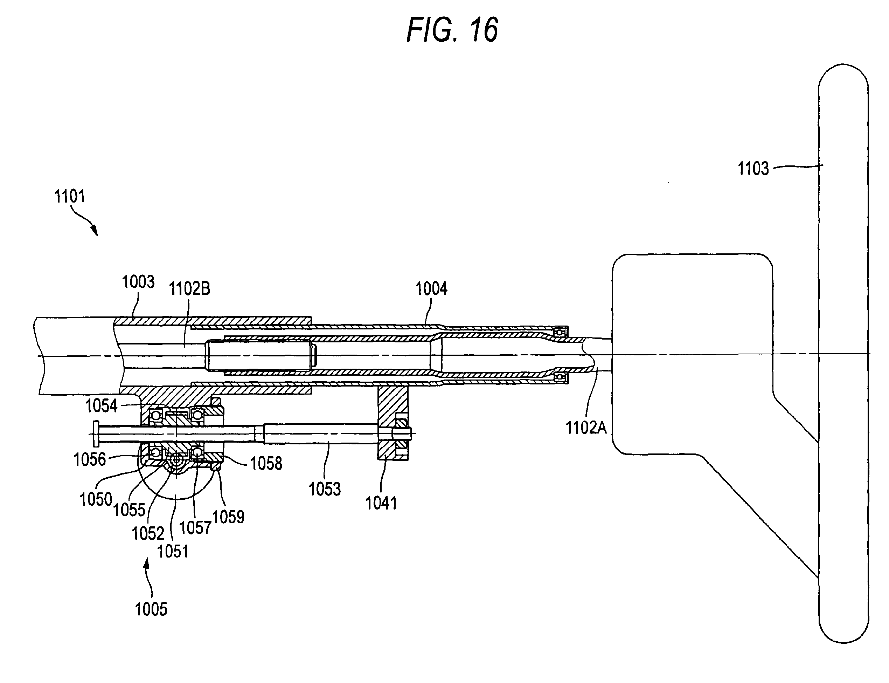

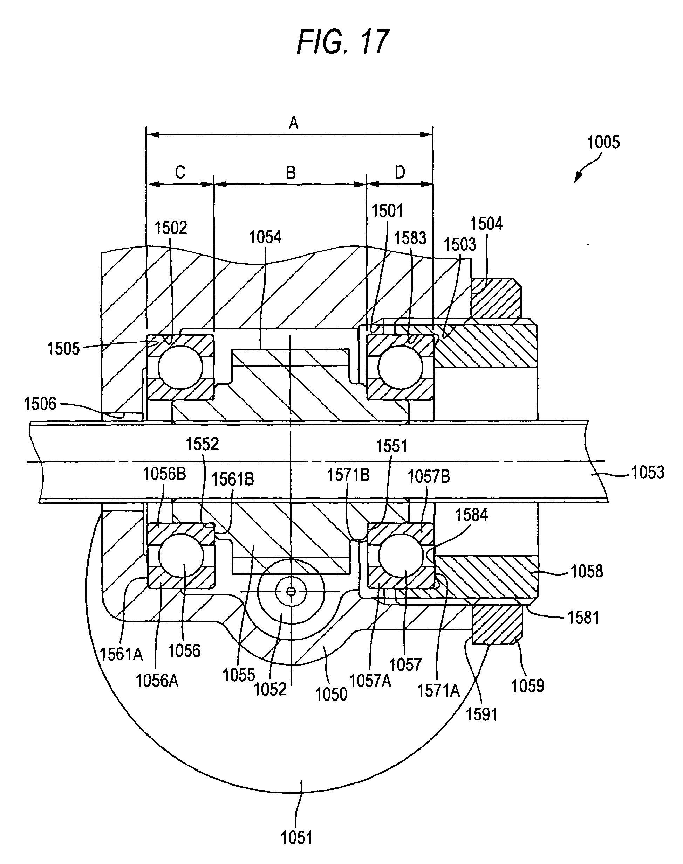

Fig. 16 is a partly sectional front view showing main parts of a telescopic type electric steering apparatus of a sixth embodiment of the present invention. Fig. 17 is a sectional view showing main parts of a telescopic driving mechanism shown in Fig. 16. In a below-described explanation, only a structural part and an operation different from those of the above-described embodiments will be described and a duplicated explanation will be omitted. Further, the same parts as those of the above-described embodiments are designated by the same reference numerals and described.

The sixth embodiment is an example in which an outer ring 1057A of a bearing 1057 in an opening end side is supported not by a housing 1050 but by a bearing pressing nut 1058. Namely, as shown in Figs. 16 and 17, to the inner periphery of a lower column 1003, an upper column 1004 is fitted so that a telescopic position can be adjusted (slide in parallel with a central axis of the lower column 3). On the upper column 1004, an upper steering shaft 1102A is supported to freely rotate. To an end part of the upper steering shaft 1102A in the rear side (a right side of Fig. 16) of a vehicle body, a steering wheel 1103 is fixed.

On the lower column 1003, a lower steering shaft 1102B is supported to freely rotate. The lower steering shaft 1102B is spline-connected to the upper steering shaft 1102A. Accordingly, the rotation of the upper steering shaft 1102A is transmitted to the lower steering shaft 1102B irrespective of the telescopic position of the upper column 1004.

To the outer periphery of the lower surface of the lower column 1003, a housing 1050 is formed in which a telescopic driving mechanism 1005 for adjusting a telescopic position is incorporated. In the lower surface of the lower column 1003, a round bar shaped feed screw shaft 1053 is arranged in parallel with the central axis of the lower column 1003 and an end of the feed screw shaft 1053 in the rear side of the vehicle body (the right end of Fig. 16) is connected to a lower end of a flange 1041 fixed to the upper column 1004 in the rear side of the vehicle body.

To the housing 1050, a telescopic motor 1051 is attached. The rotation of a worm 1052 attached to an output shaft not illustrated of the telescopic motor 1051 is transmitted to a worm wheel 1054 to rotate a feed nut 1055 screwed to the feed screw shaft 1053. The worm wheel 1054 is formed on the outer periphery of the feed nut 1055. The feed nut 1055 is rotatably supported by bearings 1056 and 1057.

In the housing 1050, a hole 1501 of a large diameter circular in section is formed in an opening end side (a right side of Fig. 17) and a hole 1502 of a small diameter circular in section is formed in a closed end side (a left side of Fig. 17). In the hole 1501 of the large diameter, a female screw 1503 is formed in the opening end side and a male screw 1581 formed on the outer periphery of a bearing pressing nut 1058 is screwed to the female screw 1503.

In a left part of the bearing pressing nut 1058, a bearing hole 1583 is formed. To the bearing hole 1083, an outer ring 1057A of the bearing 1057 is internally fitted. Further, to the hole 1502 of the small diameter, an outer ring 1056A of the bearing 1056 whose outside diameter is the same as that of an outer ring 1057A of the bearing 1057 is internally fitted. That is, the bearing 1056 and the bearing 1057 are common parts.

Further, the bearing pressing nut 1058 presses leftward the right end face 1571A of the outer ring 1057A of the bearing 1057 by a step surface 1584 of the bearing hole 1583. A lock nut 1059 is screwed to the male screw 1581 of the bearing pressing nut 1058 to press a left end face 1591 of the lock nut 1059 to a right end face 1504 of the housing 1050 and lock the bearing pressing nut 1058. In the sixth embodiment, since the materials of the housing 1050, the feed nut 1055 and the bearings 1056 and 1067 are respectively different, coefficients of linear expansion are respectively greatly different.

A left end face 1561A of the outer ring 1056A of the bearing 1056 abuts on a closed end face 1505 at the left end of the small diameter hole 1502. When the right end face 1571A of the outer ring 1057A of the bearing 1057 is pressed leftward by the step surface 1584 of the bearing pressing nut 1058, its pressing force is transmitted to the closed end face 1505 at the left end of the small diameter hole 1502 through the left end face 1571B of an inner ring 1057B of the bearing 1057,the right end face 1551 of the feed nut 1055, the left end face 1552 of the feed nut 1055, the right end face 1561B of an inner ring 1056B of the bearing 1056 and the left end face 1561A of the outer ring 1056A of the bearing 1056. Accordingly, a proper pressurizing force can be applied to the bearings 1056 and 1057.

In the telescopic driving mechanism 1005 of the sixth embodiment, in Fig. 17, it is assumed that a distance between both the end faces of the bearings 1056 and 1057 of the housing 1050 is A, a distance between the right end face 1551 and the left end face 1552 of the feed nut 1055 is B, an axial width of the bearing 1056 is C and an axial width of the bearing 1057 is D. Further, assuming that a coefficient of linear expansion of the housing 1050 is K1, a coefficient of linear expansion of the feed nut 1055 is K2 and a coefficient of linear expansion of the bearings 1056 and 1957 is K3,

$$A = B + C + D$$

$$A \cdot K1 = B \cdot K2 + (C+D) \cdot K3$$

are established.

The distance A between both the end faces of the bearings 1056 and 1057 of the housing 1050, the distance B between the right end face 1551 and the left end face 1552 of the feed nut 1055, the axial width C of the bearing 1056 and the axial width D of the bearing 1057 may be set so as to satisfy the two equations at the same time.

When the dimensions of the respective parts are set as described above, even if temperature changes, the total of the variations of the axial dimensions of the feed nut 1055 and the bearings 1056 and 1057 is constantly equal to the variation of the axial dimension of the housing 1050 for accommodating the feed nut 1055 and the bearings 1056 and 1057. Therefore, the variation of the initially set pressurizing force does not arise and the rise of an operating torque or the generation of a hammering sound during rotating the feed nut does not occur.

In the sixth embodiment, since the dimension of the outside diameter of the outer ring 1057A of the bearing 1057 is smaller than that of the fifth embodiment, the telescopic driving mechanism 1005 can be made to be compact and the bearing 1056 and the bearing 1057 can be made to be common parts. Thus, the number of the parts can be reduced.

Seventh Embodiment

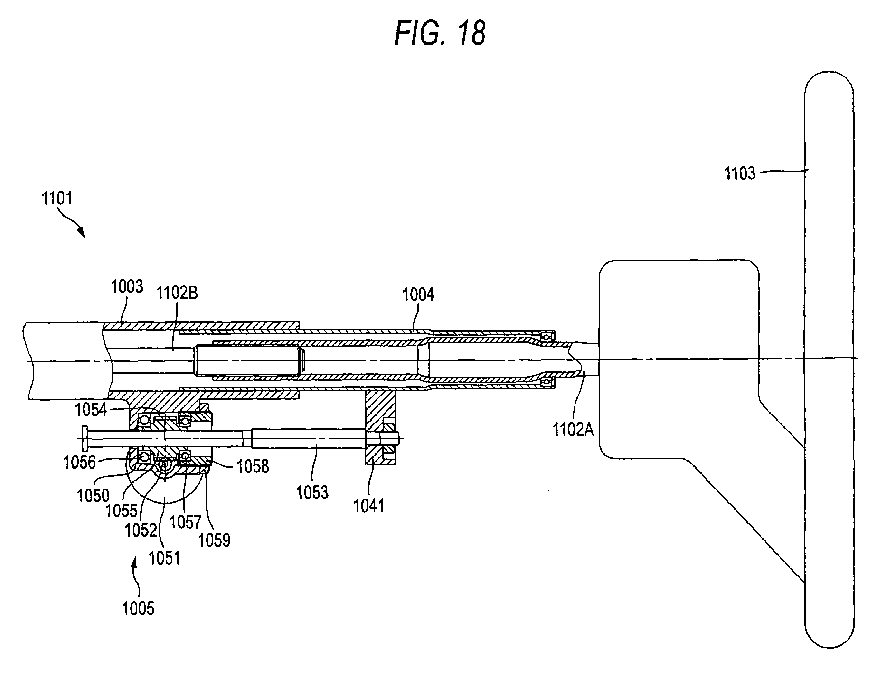

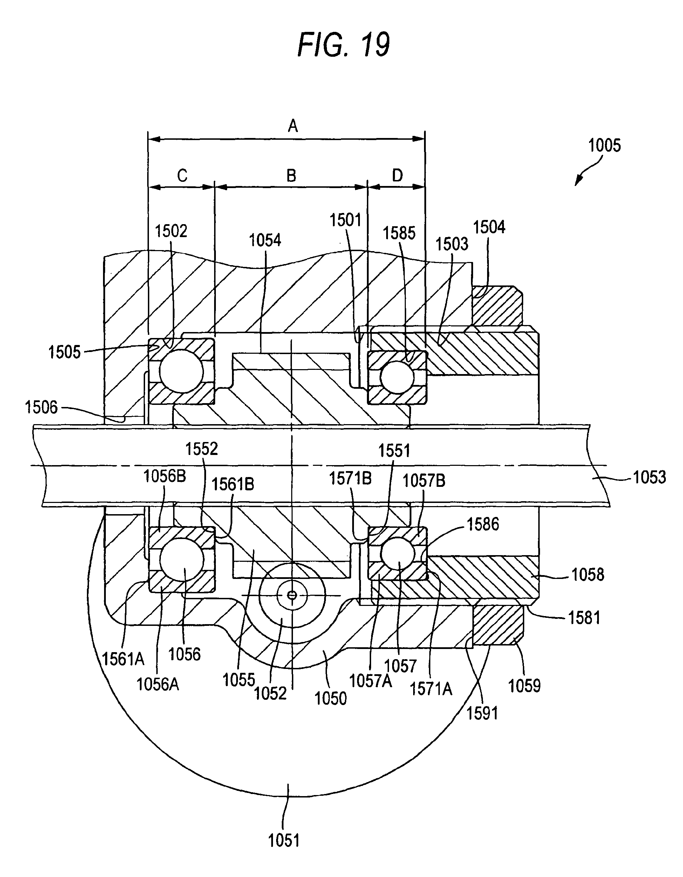

Fig. 18 is a partly sectional front view showing main parts of a telescopic type electric steering apparatus of a seventh embodiment of the present invention. Fig. 19 is a sectional view showing main parts of a telescopic driving mechanism shown in Fig. 18. In a below-described explanation, only a structural part and an operation different from those of the above-described embodiments will be described and a duplicated explanation will be omitted. Further, the same parts as those of the above-described embodiments are designated by the same reference numerals and described.

The seventh embodiment is a modified embodiment of the sixth embodiment in which an outer ring 1057A of a bearing 1057 in an opening end side is supported by a bearing pressing nut 1058 and the outside diameter of the outer ring 1057A of the bearing 1057 in the opening end side is smaller than the outside diameter of an outer ring 1056A of a bearing 1056 in a closed end side.

On the outer periphery of a lower surface of a lower column 1003, a housing 1050 is formed in which a telescopic driving mechanism 1005 for adjusting a telescopic position is incorporated. In the lower surface of the lower column 1003, a round bar shaped feed screw shaft 1053 is arranged in parallel with the central axis of the lower column 1003 and an end of the feed screw shaft 1053 in the rear side of a vehicle body (a right end of Fig. 18) is connected to a lower end of a flange 1041 fixed to an upper column 1004 in the rear side of the vehicle body.

To the housing 1050, a telescopic motor 1051 is attached. The rotation of a worm 1052 attached to an output shaft not illustrated of the telescopic motor 1051 is transmitted to a worm wheel 1054 to rotate a feed nut 1055 screwed to the feed screw shaft 1053. The worm wheel 1054 is formed on the outer periphery of the feed nut 1055. The feed nut 1055 is supported by the bearings 1056 and 1057 to freely rotate.

In the housing 1050, a hole 1501 of a large diameter circular in section is formed in an opening end side (a right side of Fig. 19) and a hole 1502 of a small diameter circular in section is formed in a closed end side (a left side of Fig. 19). In the hole 1501 of the large diameter, a female screw 1503 is formed in the opening end side and a male screw 1581 formed on the outer periphery of a bearing pressing nut 1058 is screwed to the female screw 1503.

To the small diameter hole 1502, the outer ring 1056A of the bearing 1056 is internally fitted. In a left part of the bearing pressing nut 1058, a bearing hole 1585 is formed that has a diameter smaller than the inside diameter of the small diameter hole 1502. To the bearing hole 1585, an outer ring 1057A of the bearing 1057 is internally fitted. The outside diameter of the outer ring 1057A of the bearing 1057 is formed to be smaller than that of the outer ring 1056A of the bearing 1056.

Further, the bearing pressing nut 1058 presses leftward the right end face 1571A of the outer ring 1057A of the bearing 1057 by a step surface 1586 of the bearing hole 1585. A lock nut 1059 is screwed to the male screw 1581 of the bearing pressing nut 1058 to press a left end face 1591 of the lock nut 1059 to a right end face 1504 of the housing 1050 and lock the bearing pressing nut 1058. In the seventh embodiment, since the materials of the housing 1050, the feed nut 1055 and the bearings 1056 and 1067 are respectively different, coefficients of linear expansion are respectively greatly different.

A left end face 1561A of the outer ring 1056A of the bearing 1056 abuts on a closed end face 1505 at the left end of the small diameter hole 1502. When the right end face 1571A of the outer ring 1057A of the bearing 1057 is pressed leftward by the step surface 1586 of the bearing pressing nut 1058, its pressing force is transmitted to the closed end face 1505 at the left end of the small diameter hole 1502 through the left end face 1571B of an inner ring 1057B of the bearing 1057, the right end face 1551 of the feed nut 1055, the left end face 1552 of the feed nut 1055, the right end face 1561B of an inner ring 1056B of the bearing 1056 and the left end face 1561A of the outer ring 1056A of the bearing 1056. Accordingly, a proper pressurizing force can be applied to the bearings 1056 and 1057.

In the telescopic driving mechanism 1005 of the seventh embodiment, in Fig. 19, it is assumed that a distance between both the end faces of the bearings 1056 and 1057 of the housing 1050 is A, a distance between the right end face 1551 and the left end face 1552 of the feed nut 1055 is B, an axial width of the bearing 1056 is C and an axial width of the bearing 1057 is D. Further, assuming that a coefficient of linear expansion of the housing 1050 is K1, a coefficient of linear expansion of the feed nut 1055 is K2 and a coefficient of linear expansion of the bearings 1056 and 1957 is K3,

$$A = B + C + D$$

$$A \cdot K1 = B \cdot K2 + (C+D) \cdot K3$$

are established.

The distance A between both the end faces of the bearings 1056 and 1057 of the housing 1050, the distance B between the right end face 1551 and the left end face 1552 of the feed nut 1055, the axial width C of the bearing 1056 and the axial width D of the bearing 1057 may be set so as to satisfy the two equations at the same time.

When the dimensions of the respective parts are set as described above, even if temperature changes, the total of the variations of the axial dimensions of the feed nut 1055 and the bearings 1056 and 1057 is constantly equal to the variation of the axial dimension of the housing 1050 for accommodating the feed nut 1055 and the bearings 1056 and 1057. Therefore, the variation of the initially set pressurizing force does not arise and the rise of an operating torque or the generation of a hammering sound during rotating the feed nut does not occur.

In the seventh embodiment, since the dimension of the outside diameter of the outer ring 1057A of the bearing 1057 in the opening end side can be made to be smaller than the dimension of the outside diameter of the outer ring 1056A of the bearing 1056 in the closed end side, the telescopic driving mechanism 1005 can be made to be more compact.

Eighth Embodiment

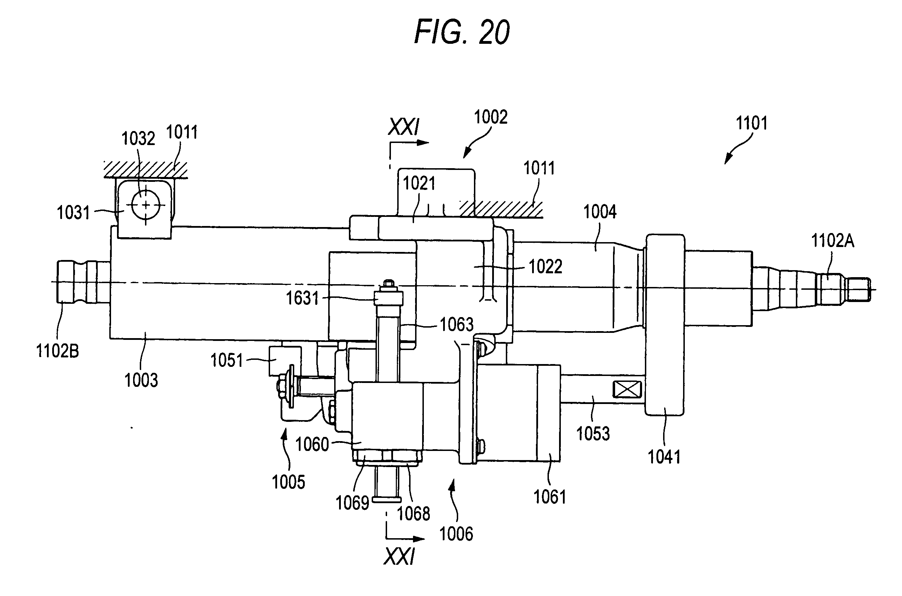

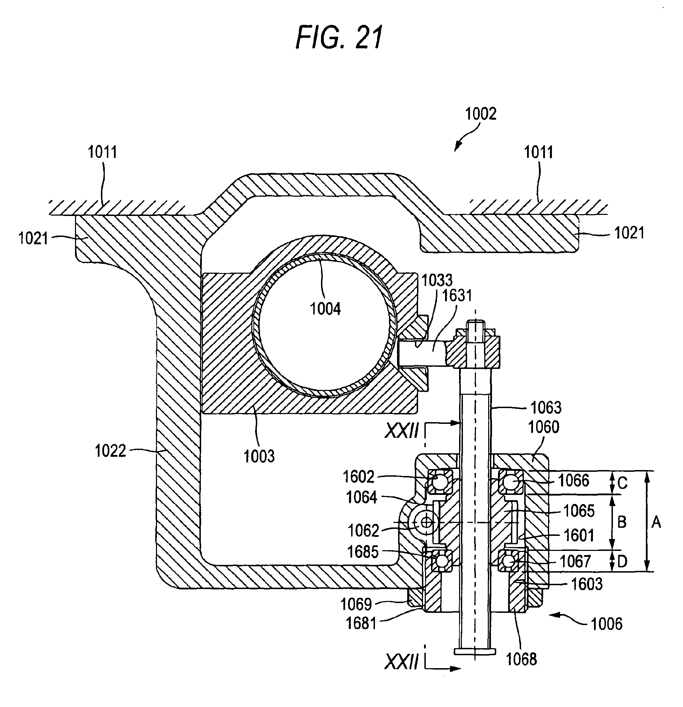

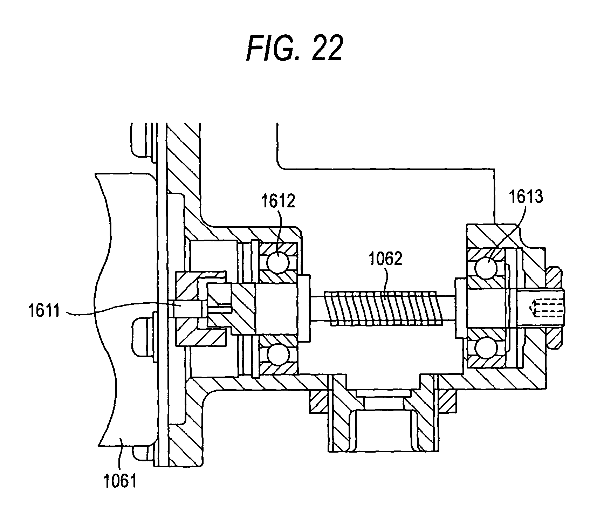

Fig. 20 is a front view showing main parts of a tilting and telescopic type electric steering apparatus of an eighth embodiment of the present invention. Fig. 21 is a sectional view taken along a line XXI-XXI of Fig. 20 and showing main parts of a tilt driving mechanism. Fig. 22 is a sectional view taken along a line XXII-XXII of Fig. 21 and showing main parts of a tilting motor and a worm. In a below-described explanation, only a structural part and an operation different from those of the above-described embodiments will be described and a duplicated explanation will be omitted. Further, the same parts as those of the above-described embodiments are designated by the same reference numerals and described.

The eighth embodiment shows an example applied to the tilting and telescopic type electric steering apparatus. As shown in Figs. 20 to 21, the tilting and telescopic type electric steering apparatus 1101 of the present invention includes a vehicle body attaching bracket 1002 , a lower column (outer column) 1003 and an upper column (inner column) 1004.

The vehicle body attaching bracket 1002 in the rear side of a vehicle body has an upper plate 1021 fixed to the vehicle body 1011. In an end part of the lower column 1003 in the front side of the vehicle body, a bracket 1031 is integrally formed. To the bracket 1031, a central shaft 1032 of tilting is attached. The end part of the hollow and cylindrical lower column 1003 in the front side of the vehicle body is supported on the vehicle body 1011 so that a tilting position can be adjusted (swing in a plane parallel to a sheet surface in Fig. 20)by considering the central shaft 1032 of tilting to be a fulcrum point.

In the upper plate 1021 of the vehicle body attaching bracket 1002, right and left side plates 1022 and 1022 are formed that extend in parallel and downward from the upper plate 1021 and the lower column 1003 is held between the inner side surfaces of the right and left side plates 1022 and 1022 so as to tilt and slide.

To the outer periphery of the lower surface of the lower column 1003, a telescopic driving mechanism 1005 for adjusting a telescopic position is attached. Further, to the outer periphery of the lower surface of the lower column 1003, a telescopic motor 51 that is partly seen in Fig. 20 is attached. To the lower surface of the lower column 1003, a feed screw shaft 1053 is attached in parallel with the central axis of the lower column 1003 and an end of the feed screw shaft 53 in the rear side of the vehicle body (the right end of Fig. 20) is connected to a lower end of a flange 1041 fixed to an end of the upper column 1004 in the rear side of the vehicle body.

The rotation of a worm attached to an output shaft not illustrated of the telescopic motor 1051 is transmitted to a worm wheel not shown in the drawing to rotate a feed nut that is not illustrated in the drawing and is screwed to the feed screw shaft 1053. The rotation of the feed nut enables the feed screw shaft 1053 to reciprocate (rightward and leftward in Fig. 20) so that the telescopic position of the upper column 1004 is adjusted. Since the telescopic driving mechanism 1005 has the same structure as that of the fifth embodiment to the seventh embodiment, a detailed description will be omitted.

Further, in a lower part of the vehicle body attaching bracket 1002, a tilt driving mechanism 1006 for adjusting a tilting position is attached. A worm 1062 attached to an output shaft 1611 (see Fig. 22)of a tilting motor 1061 for the tilt driving mechanism 1006 is engaged with a worm wheel 1064 to convert the rotation of the tilting motor 1061 to a reciprocating movement of a feed screw shaft 1063 attached in a lower part of a feed screw shaft 63. The worm 1062 is supported on the lower end of the vehicle body attaching bracket 1002 so as to freely rotate by bearings 1612 and 1613. A feed nut 1065 having the worm wheel formed on its outer periphery is screwed to the feed screw shaft 1063 (see Fig. 21) formed with metal.

The feed screw shaft 1063 extends vertically (in a vertical direction in Figs. 20 and 21) to a central axis of the tilting motor 1061. To an upper end of the feed screw shaft 1063, a tilt driving force transmitting pin 1631 made of metal is fixed. The tilt driving force transmitting pin 1631 protrudes toward the central axis of the lower column 1003 and an end of the tilt driving force transmitting pin 1631 is fitted to a elongated hole 1033 (a long diameter side of the elongated hole 1033 is arranged in the direction intersecting at right angles to the surface of a sheet of Fig. 21) formed in the lower column 1003.

When the feed nut 1065 rotates, the tilt driving force transmitting pin 1631 linearly moves in a vertical direction together with the feed screw shaft 1063. The feed screw shaft 1063 linearly moves in the vertical direction in Fig. 20. As compared therewith, the lower column 1003 swings by considering the central shaft 1032 of tilting to be the fulcrum point. Accordingly, a deviation arises between both the movements, however, this deviation can be absorbed by sliding the tilt driving force transmitting pin 1631 along the elongated hole 1033 rightward and leftward in Fig. 20.

In this electric steering apparatus 1101, when the tilting position of the steering wheel 1003 needs to be adjusted, a driver operates a switch that is not shown in the drawing to rotate the tilting motor 1061 either in a normal direction or a reverse direction. Then, the feed nut 1065 rotates under the rotation of the tilting motor 1061 so that the feed screw shaft 1063 linearly moves.

Then, the tilt driving force transmitting pin 1631 formed integrally with the feed screw shaft 1063 carries out the linear movement. Since the tilt driving force transmitting pin 1631 is engaged with the elongated hole 1033 of the lower column 1003, the lower column 1003 is tilted upward or downward by considering the central shaft 1032 of tilting to be the fulcrum point.

In the lower surface of the vehicle body attaching bracket 1002, a housing 1060 is formed in which the tilt driving mechanism 1006 is incorporated. In the housing 1060, a hole 1601 of a large diameter circular in section is formed in an opening end side (a lower side of Fig. 21) and a hole 1602 of a small diameter circular in section is formed in a closed end side (an upper side of Fig. 21). In the hole 1601 of the large diameter, a female screw 1603 is formed in the opening end side and a male screw 1681 formed on the outer periphery of a bearing pressing nut 1068 is screwed to the female screw 1603.

To the small diameter hole 1602, an outer ring of a bearing 1066 is internally fitted. In the upper part of the bearing pressing nut 1068, a bearing hole 1685 is formed that has a diameter smaller than the inside diameter of the small diameter hole 1602. To the bearing hole 1685, an outer ring of a bearing 1067 is internally fitted. The outside diameter of the outer ring of the bearing 1067 is formed to be smaller than the outside diameter of the outer ring of the bearing 1066.

Further, the bearing pressing nut 1068 presses upward the lower end face of the outer ring of the bearing 1067 by a step surface of the bearing hole 1685. A lock nut 1069 is screwed to a male screw 1681 of the bearing pressing nut 1068 to press an upper end face of the lock nut 1069 to the lower end face of the housing 1060 and lock the bearing pressing nut 1068. In the eighth embodiment of the present invention, since the materials of the housing 1060, the feed nut 1065 and the bearings 1066 and 1067 are respectively different, coefficients of linear expansion are respectively greatly different.

An upper end face of the outer ring of the bearing 1066 abuts on a closed end face at the upper end of the small diameter hole 1602. When the lower end face of the outer ring of the bearing 1067 is pressed upward by a step surface of the bearing pressing nut 1068, its pressing force is transmitted to the closed end face at the upper end of the small diameter hole 1602 through the upper end face of an inner ring of the bearing 1067,the lower end face of the feed nut 1065, the upper end face of the feed nut 1065, the lower end face of an inner ring of the bearing 1066 and the upper end face of the outer ring of the bearing 1066. Accordingly, a proper pressurizing force can be applied to the bearings 1066 and 1067.

In the tilt driving mechanism 1006 of the eighth embodiment, in Fig. 21, it is assumed that a distance between both the end faces of the bearings 1066 and 1067 of the housing 1060 is A, a distance between the lower end face and the upper end face of the feed nut 1065 is B, an axial width of the bearing 1066 is C and an axial width of the bearing 1067 is D. Further, assuming that a coefficient of linear expansion of the housing 1060 is K1, a coefficient of linear expansion of the feed nut 1065 is K2 and a coefficient of linear expansion of the bearings 1066 and 1967 is K3,

$$A = B + C + D$$

$$A \cdot K1 = B \cdot K2 + (C+D) \cdot K3$$

are established.

The distance A between both the end faces of the bearings 1066 and 1067 of the housing 1060, the distance B between the lower end face and the upper end face of the feed nut 1065, the axial width C of the bearing 1066 and the axial width D of the bearing 1067 may be set so as to satisfy the two equations at the same time.

When the dimensions of the respective parts are set as described above, even if temperature changes, the total of the variations of the axial dimensions of the feed nut 1065 and the bearings 1066 and 1067 is constantly equal to the variation of the axial dimension of the housing 1060 for accommodating the feed nut 1065 and the bearings 1066 and 1067. Therefore, the variation of the initially set pressurizing force does not arise and the rise of an operating torque or the generation of a hammering sound during rotating the feed nut does not occur.

In the eight embodiment, since the dimension of the outside diameter of the outer ring of the bearing 1067 in the opening end side can be made to be smaller than the dimension of the outside diameter of the outer ring of the bearing 1006 in the closed end side, the tilt driving mechanism 1006 can be made to be more compact.

In the embodiments of the present invention, the lower column 1003 is formed by an outer column and the upper column 1004 is formed by an inner column. However, the lower column 1003 may be formed by the inner column and the upper column 1004 may be formed by the outer column.

According to the fifth to eighth embodiments of the present invention, below-described steering apparatuses (2-1) to (2-7) are provided.

(2-1) A steering apparatus comprising:

a steering shaft on which a steering wheel is mounted in a rear side of a vehicle body;
a column that is attached to the vehicle body through a vehicle body attaching bracket, supports the steering shaft so as to freely rotate and can carry out an adjustment of a tilting position by a tilt center axis as a fulcrum point or an adjustment of a telescopic position along a central axis of the steering shaft;
an electric actuator provided on the column or the vehicle body attaching bracket;
a feed nut rotated and driven by the electric actuator;
a bearing that supports both ends of the feed nut in the axial direction so as to freely rotate;
a housing that accommodates the feed nut and the bearing;
a feed screw mechanism having a feed screw shaft that is screwed to the feed nut and linearly moves in accordance with the rotating movement of the feed nut to carry out a tilting movement or a telescopic movement of the column, wherein the axial dimensions of the feed nut, the bearing and the housing are set so that the total of the variations of the axial dimensions of the feed nut and the bearing due to a temperature change is equal to the variation of the axial dimension of the housing due to a temperature change.

(2-2) A steering apparatus according to (2-1), wherein an outer ring of a bearing in the opening end side of the housing may be internally fitted to a bearing hole formed in a bearing pressing nut screwed to the opening end side of the housing.

(2-3) A steering apparatus according to (2-2), wherein the dimension of the outside diameter of the outer ring of the bearing in the opening end side of the housing may be formed to be the same as the dimension of the outside diameter of the outer ring of a bearing in the closed end side of the housing.

(2-4) A steering apparatus according to the above-described (2-2), wherein the dimension of the outside diameter of the outer ring of the bearing in the opening end side of the housing may be formed to be smaller than the dimension of the outside diameter of the outer ring of the bearing in the closed end side of the housing.

(2-5) A steering apparatus according to any one of the above-described (2-1) to (2-4), wherein the housing may be formed with aluminum, the feed nut may be formed with a resin and the bearing may be formed with bearing steel.

(2-6) A steering apparatus according to (2-1), wherein the feed nut may be made of a resin and a glass fiber may be added.

(2-7) A steering apparatus according to (2-6), wherein a quantity of addition of the glass fiber may be set to 30 to 70 mass %.

The present invention is described in detail by referring to specific embodiments, however, it is to be understood to a person with ordinary skill in the art that various changes or modifications may be made without departing the spirit and the scope of the present invention.

This application is based on Japanese Patent Application (P.2006-062225) filed on March 8, 2006,

Japanese Patent Application (P.2006-148175) filed on May 29, 2006,
Japanese Patent Application (P.2006-177317) filed on June 27, 2006 and
Japanese Patent Application (P.2007-001673) filed on January 9, 2007 and contents thereof are incorporated herein as a reference.

Industrial Applicability

In the steering apparatus and the feed screw mechanism of the present invention, at the normal temperature, the pitch of the feed nut made of the synthetic resin is formed to be larger than the pitch of the feed screw shaft made of the metal. Accordingly, even when the working temperature changes, since an operating torque is not increased, the operating torque is not varied and an operating sound is not increased. Since the operating torque is not increased, an output of a motor for driving the feed screw mechanism may be decreased. As a result, the motor can be made to be compact to reduce a production cost and a space may be decreased to improve a degree of freedom of an arrangement. Further, the structure of the feed nut itself is simple, so that a working cost of the feed nut is reduced and a dimension of the feed nut in the axial direction can be shortened.

The feed screw mechanism of the present invention has a property that as the working temperature of the feed screw mechanism is higher, the operating torque necessary for operating the feed screw mechanism becomes larger. Accordingly, the feed screw mechanism of the present invention is employed for the steering apparatus so that the rise of the operating torque at the low temperature can be suppressed as an entire part of the steering apparatus. As a result, since the feed screw mechanism can be driven by the motor low in its output, the motor can be made to be compact, the production cost can be reduced and the space may be small, the degree of freedom of an arrangement is improved.

Further, in the steering apparatus of the present invention, the width of the screw thread of the feed nut of the feed screw mechanism is formed to be larger than the width of the screw thread of the feed screw shaft. Accordingly, the length of the feed nut in the axial direction is short. Consequently, the weight of the feed nut is reduced and a production cost can be reduced.

In the steering apparatus of the present invention, the dimensions of the feed nut, a bearing and a housing in the axial direction are set so that the total of the variation of the dimensions of the feed nut and the bearing in the axial direction due to a temperature change is the same as the variation of the dimension of the housing in the axial direction due to the temperature change. Accordingly, the variation of a pressurizing force due to the temperature change is suppressed, the increase of the operating torque or the generation of a hammering sound during rotating the feed nut can be suppressed.

**Claims**

**1.** A feed screw mechanism comprising:

a feed screw shaft made of metal; and
a feed nut made of a synthetic resin, screwed to the feed screw shaft and moving relative to the feed screw shaft, wherein
the feed screw mechanism has a property that as a working temperature of the feed screw mechanism becomes higher, an operating torque necessary for operating the feed screw mechanism becomes larger.

**2.** A feed screw mechanism comprising:

a feed screw shaft made of metal; and
a feed nut made of a synthetic resin, screwed to the feed screw shaft and moving relative to the feed screw shaft, wherein
a pitch of the feed nut of the feed screw mechanism is formed to be larger than a pitch of the feed screw shaft at a normal temperature.

**3.** The feed screw mechanism according to claim 2, wherein
the pitch of the feed nut is formed to be substantially larger than the pitch of the feed screw shaft within a range of 0.025 % to 0.075 % of the axial length of the feed nut.

**4.** The feed screw mechanism according to claim 2, wherein
an annular groove is formed in an end face in the axial direction of the feed nut.

**5.** The feed screw mechanism according to claim 4, wherein
an inner peripheral surface of the annular groove is formed so as to have a diameter reduced toward an opening side of the annular groove.

**6.** The feed screw mechanism according to claim 2, wherein

a glass transition point of the synthetic resin forming the feed nut is a value exceeding an upper limit value of a range of the working temperature of the feed screw mechanism.

7. A steering apparatus comprising:

    a steering shaft on which a steering wheel is mounted in a rear side of a vehicle body;
    a column that rotatably supports the steering shaft and adjusts a tilting position relative to a tilt center axis as a fulcrum point or adjusts a telescopic position along a central axis of the steering shaft;
    a vehicle body attaching bracket that attaches the column to the vehicle body;
    an electric actuator provided on the column or the vehicle body attaching bracket; and
    a feed screw mechanism according to claim 1 that carries out a tilting movement or a telescopic movement of the column by the electric actuator.

8. A steering apparatus comprising:

    a steering shaft on which a steering wheel is mounted in a rear side of a vehicle body;
    a column that rotatably supports the steering shaft and adjusts a tilting position relative to a tilt center axis as a fulcrum point or adjusts a telescopic position along a central axis of the steering shaft;
    a vehicle body attaching bracket that attaches the column to the vehicle body;
    an electric actuator provided on the column or the vehicle body attaching bracket; and
    a feed screw mechanism according to claim 2 that carries out a tilting movement or a telescopic movement of the column by the electric actuator.

9. The steering apparatus according to claim 8, wherein
the pitch of a feed nut is formed to be substantially larger than the pitch of a feed screw shaft within a range of 0.025 % to 0.075 % of the axial length of the feed nut.

10. The steering apparatus according to claim 8, wherein
an annular groove is formed in an end face in the axial direction of the feed nut.

11. The steering apparatus according to claim 10, wherein
an inner peripheral surface of the annular groove is formed so as to have a diameter reduced toward an opening side of the annular groove.

12. The steering apparatus according to claim 8, wherein
a glass transition point of the synthetic resin forming the feed nut is a value exceeding an upper limit value of a range of the working temperature of the feed screw mechanism.

13. The steering apparatus according to claim 7, wherein
a width of the screw thread of the feed nut of the feed screw mechanism is formed to be larger than a width of the screw thread of the feed screw shaft.

14. The steering apparatus according to claim 13, wherein
a ratio of the width of the screw thread of the feed nut to the width of the screw thread of the feed screw shaft is formed to be proportional to an inverse number of a material strength of the feed nut and a material strength of the feed screw shaft.

15. The steering apparatus according to claim 13, wherein
the feed screw shaft is a rolled screw.

16. The steering apparatus according to claim 8, wherein
the width of the screw thread of a feed nut of the feed screw mechanism is formed to be larger than the width of the screw thread of the feed screw shaft.

17. The steering apparatus according to claim 16, wherein
a ratio of the width of the screw thread of the feed nut to the width of the screw thread of the feed screw shaft is formed to be proportional to an inverse number of a material strength of the feed nut and a material strength of the feed screw shaft.

**18.** The steering apparatus according to claim 16, wherein the feed screw shaft is a rolled screw.

FIG. 1

# FIG. 2

# FIG. 3

*FIG. 4*

EP 2 003 370 A2

*FIG. 5*

(1)

B3

55 (65)

53 (63)

A3

(2)

B2

55 (65)

53 (63)

A2

(3)

B1

55 (65)

53 (63)

A1

*FIG. 6*

*FIG. 7*

## FIG. 8

CHANGE OF OPERATING TORQUE OF FEED SCREW MECHANISM DEPENDING ON WORKING TEMPERATURE
(RESULTS OBTAINED BY TESTING THE DIFFERENCE OF PROPERTIES DUE TO THE DIFFERENCE OF PITCH

PITCH OF 1.985mm OF
FEED SCREW SHAFT
(DIFFERENCE 15μ OF
PITCH FROM FEED NUT)

PITCH OF 1.990mm OF
FEED SCREW SHAFT
(DIFFERENCE 10μ OF
PITCH FROM FEED NUT)

OPERATION TORQUE

PITCH OF 1.995mm OF
FEED SCREW SHAFT
(DIFFERENCE 5μ OF
PITCH FROM FEED NUT)

PITCH OF 1.980mm OF
FEED SCREW SHAFT
(DIFFERENCE 20μ OF
PITCH FROM FEED NUT)

0

0

WORKING TEMPERATURE

EP 2 003 370 A2

*FIG. 9*

(1) OPERATING TORQUE OF CONVENTIONAL FEED SCREW
MECHANISM

LOW
TEMPERATURE

WORKING
TEMPERATURE

HIGH
TEMPERATURE

(2) OPERATING TORQUE OF FEED SCREW MECHANISM OF
THE PRESENT INVENTION

LOW
TEMPERATURE

WORKING
TEMPERATURE

HIGH
TEMPERATURE

# FIG. 10

OPERATING TORQUE AND OPERATING FORCE OF CONVENTIONAL STEERING APPARATUS

(1) OPERATING FORCE OF PARTS
EXCEPT FEED SCREW MECHANISM

(2) OPERATING TORQUE OF FEED SCREW
MECHANISM

(3) OPERATING TORQUE OF ENTIRE
PART OF STEERING APPARATUS

LOW
TEMPERATURE

WORKING
TEMPERATURE

HIGH
TEMPERATURE

LOW
TEMPERATURE

WORKING
TEMPERATURE

HIGH
TEMPERATURE

LOW
TEMPERATURE

WORKING
TEMPERATURE

HIGH
TEMPERATURE

## FIG. 11

OPERATING TORQUE AND OPERATING FORCE OF STEERING APPARATUS OF THE PRESENT INVENTION

(1) OPERATING FORCE OF PARTS
    EXCEPT FEED SCREW MECHANISM

(2) OPERATING TORQUE OF FEED SCREW
    MECHANISM

(3) OPERATING TORQUE OF ENTIRE
    PART OF STEERING APPARATUS

LOW TEMPERATURE    WORKING TEMPERATURE    HIGH TEMPERATURE

LOW TEMPERATURE    WORKING TEMPERATURE    HIGH TEMPERATURE

LOW TEMPERATURE    WORKING TEMPERATURE    HIGH TEMPERATURE

EP 2 003 370 A2

# FIG. 12

## FIG. 13

55 (65)

FEED NUT

FEED SCREW SHAFT

53 (63)

L2

L1

W2

W1

P

H

D1

D2

71

θ

EP 2 003 370 A2

## FIG. 14

# FIG. 15

FIG. 16

# FIG. 17

FIG. 18

EP 2 003 370 A2

## FIG. 19

# FIG. 20

EP 2 003 370 A2

## FIG. 21

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001315648 A
- JP 2000238647 A
- JP 7008156 A
- JP 3379092 B

- JP P2006062225 B
- JP P2006148175 B
- JP P2006177317 B
- JP P2007001673 B